# EUROPEAN PATENT APPLICATION

(11) **EP 4 606 286 A1**
(43) Date of publication of application: **27.08.2025**
(21) Application number: 24797372.0
(22) Date of filing: 23.04.2024
(51) Int. Cl.: A47J 47/08, F25D 25/00, B65D 51/16, A23B 7/10

(54) **FOOD STORAGE CONTAINER AND REFRIGERATOR COMPRISING SAME**

(30) Priority: 25.04.2023 KR 20230054233; 21.07.2023 KR 20230095094; 22.04.2024 KR 20240053554
(71) Applicant: Samsung Electronics Co., Ltd., Suwon-si, Gyeonggi-do 16677 (KR)
(72) Inventor: MIN, Deulre, Suwon-si, Gyeonggi-do 16677 (KR); SEO, Jungeun, Suwon-si, Gyeonggi-do 16677 (KR); YU, Jinhong, Suwon-si, Gyeonggi-do 16677 (KR); LEE, Sihoon, Suwon-si, Gyeonggi-do 16677 (KR); CHANG, Seyeun, Suwon-si, Gyeonggi-do 16677 (KR); JANG, Myoungjin, Suwon-si, Gyeonggi-do 16677 (KR); KO, Seungjo, Suwon-si, Gyeonggi-do 16677 (KR); PARK, Chanbin, Suwon-si, Gyeonggi-do 16677 (KR); SON, Seokjun, Suwon-si, Gyeonggi-do 16677 (KR); SON, Junghyun, Suwon-si, Gyeonggi-do 16677 (KR); BAE, Ilsung, Suwon-si, Gyeonggi-do 16677 (KR)
(74) Representative: Gulde & Partner
(86) International application number: PCT/KR2024/005442
(87) International publication number: WO 2024/225716

(57) **Abstract**

A food storage container including a case having an open side and forming a storage space and a case cover configured to be detachably coupled to the case so that, when coupled to the case, the case cover covers the open side of the case and seals the storage space, the case cover including a receiving portion forming a receiving space configured to accommodate a gas absorbent, and having a discharge hole between the receiving space and the storage space, a valve to open and close the discharge hole in response to a pressure inside the storage space, and a receiving portion cover configured to be detachably coupled to the receiving portion so that, when coupled to the receiving portion, the receiving portion cover seals the receiving space, wherein a gas flowing from the storage space through the discharge hole to the receiving space is adsorbed by the gas absorbent.

## Description

### [Technical Field]

The disclosure relates to a food storage container for storing food and a refrigerator including the same.

### [Background Art]

In general, a refrigerator, an apparatus for keeping food fresh, includes a main body having a storage compartment and a cold air supply device for supplying cold air to the storage compartment. The storage compartment may be provided with a storage container for storing food, and when required, a user removes the storage container from the storage compartment for use.

Some foods stored in a storage container may generate a certain amount of gas over time even though they are kept refrigerated. If a certain amount of gas continues to be produced, the pressure inside the storage container increases, which may cause the gas in the storage container to leak into the storage compartment.

### [Disclosure]

### [Technical Problem]

The present disclosure is directed to providing a food storage container capable of properly maintaining a certain gas generated from food in the storage container and preventing gas leakage due to an increase in internal pressure caused by the generated certain gas, and a refrigerator including the same.

Technical tasks to be achieved in this document are not limited to the technical tasks mentioned above, and other technical tasks not mentioned will be clearly understood by those skilled in the art from the description below.

### [Technical Solution]

According to an embodiment of the disclosure, a food storage container includes a case having an open side and forming a storage space; and a case cover configured to be detachably coupled to the case so that, when the case cover is detachably coupled to the case, the case cover covers the open side of the case and seals the storage space, the case cover including a receiving portion forming a receiving space configured to accommodate a gas absorbent, and having a discharge hole between the receiving space and the storage space, a valve configured to open the discharge hole in response to a pressure inside the storage space being greater than a predetermined value, and close the discharge hole in response to the pressure inside the storage space being less than the predetermined value, and a receiving portion cover configured to be detachably coupled to the receiving portion so that, when the receiving portion cover is detachably coupled to the receiving portion, the receiving portion cover seals the receiving space, wherein, when the case cover is coupled to the case and the receiving portion cover is coupled to the receiving portion with the gas absorbent accommodated in the receiving portion, and the pressure inside the storage space is greater than the predetermined value so that the valve opens the discharge hole, a gas flowing from the storage space through the discharge hole to the receiving space is removed or adsorbed by the gas absorbent by undergoing a defined chemical reaction with the gas absorbent.

### [Description of Drawings]

FIG. 1 shows a refrigerator according to an embodiment of the disclosure.
FIG. 2 shows a food storage container according to an embodiment of the disclosure.
FIG. 3 is an exploded view showing the food storage container according to an embodiment of the disclosure.
FIG. 4 shows an exploded view showing a case cover in the food storage container according to an embodiment of the disclosure.
FIG. 5 shows a lower surface of the case cover and a receiving portion cover in the food storage container according to an embodiment of the disclosure.
FIG. 6 is an exploded view showing a valve in the food storage container according to an embodiment of the disclosure.
FIG. 7 shows a cross-section along line A-A' of FIG. 1.
FIG. 8 shows an enlarged view of B shown in FIG. 7.
FIG. 9 shows a food storage container according to an embodiment of the disclosure.
FIG. 10 is an exploded view showing the case cover in the food storage container according to an embodiment of the disclosure.
FIG. 11 shows the lower surface of the case cover and the receiving portion cover in the food storage container according to an embodiment of the disclosure.
FIG. 12 shows the food storage container according to an embodiment of the disclosure, before the receiving portion cover slides with respect to the case cover.
FIG. 13 shows the food storage container according to an embodiment of the disclosure, after the receiving portion cover slides with respect to the case cover.
FIG. 14 shows a cross-section along line C-C' of FIG. 13.
FIG. 15 shows a food storage container according to an embodiment of the disclosure.
FIG. 16 is an exploded view showing the case cover in the food storage container according to an embodiment of the disclosure.
FIG. 17 shows FIG. 16 from another angle.
FIG. 18 shows a cross-section along line D-D' of FIG. 15.
FIG. 19 shows an example of an enlarged view of E shown in FIG. 18.
FIG. 20 shows an example of an enlarged view of E shown in FIG. 18 according to another embodiment of the disclosure.
FIG. 21 shows a case cover, according to another embodiment of the disclosure.
FIG. 22 shows a receiving portion cover removed from the case cover shown in FIG. 21.
FIG. 23 shows a lower surface the receiving portion cover shown in FIG. 22.
FIG. 24 shows a cross-section along line F-F' of FIG. 21.
FIG. 25 shows a cross-section along line G-G' of FIG. 21.
FIG. 26 shows a lower surface of the case cover shown in FIG. 21.

### [Mode of the Disclosure]

Various embodiments of the present document and terms used therein are not intended to limit the technical features described in this document to specific embodiments, and should be understood to include various modifications, equivalents, or substitutes of the corresponding embodiments.

In connection with the description of the drawings, similar reference numerals may be used for similar or related components.

The singular form of a noun corresponding to an item may include one or a plurality of the items unless clearly indicated otherwise in a related context.

In this document, phrases, such as "A or B", "at least one of A and B", "at least one of A or B," "A, B or C," "at least one of A, B and C," and "at least one of A, B, or C", may include any one or all possible combinations of items listed together in the corresponding phrase among the phrases.

As used herein, the term "and/or" includes any and all combinations of one or more of associated listed items.

Terms such as "1st", "2nd", "first" or "second" may be used simply to distinguish a component from other components, without limiting the component in other aspects (e.g., importance or order).

Further, as used in the disclosure, the terms "front", "rear", "top", "bottom", "side", "left", "right", "upper", "lower", and the like are defined with reference to the drawings, and are not intended to limit the shape and position of each component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

It will be understood that when a certain component is referred to as being "connected to", "coupled to", "supported by" or "in contact with" another component, it can be directly or indirectly connected to, coupled to, supported by, or in contact with the other component. When a component is indirectly connected to, coupled to, supported by, or in contact with another component, it may be connected to, coupled to, supported by, or in contact with the other component through a third component.

It will also be understood that when a component is referred to as being "on" or "over" another component, it can be directly on the other component or intervening components may also be present.

A refrigerator according to an embodiment of the disclosure may include a main body.

The "main body" may include an inner case, an outer case positioned outside the inner case, and an insulation provided between the inner case and the outer case.

The "inner case" may include a case, a plate, a panel, or a liner forming a storage compartment. The inner case may be formed as one body, or may be formed by assembling a plurality of plates together. The "outer case" may form an appearance of the main body, and be coupled to an outer side of the inner case such that the insulation is positioned between the inner case and the outer case.

The "insulation" may insulate inside of the storage compartment from outside of the storage compartment to maintain inside temperature of the storage compartment at appropriate temperature without being influenced by an external environment of the storage compartment. According to an embodiment of the disclosure, the insulation may include a foaming insulation. The foaming insulation may be molded by fixing the inner case and the outer case with jigs, etc. and then injecting and foaming urethane foam as a mixture of polyurethane and a foaming agent between the inner case and the outer case.

According to an embodiment of the disclosure, the insulation may include a vacuum insulation in addition to a foaming insulation, or may be configured only with a vacuum insulation instead of a forming insulation. The vacuum insulation may include a core material and a cladding material accommodating the core material and sealing the inside with vacuum or pressure close to vacuum. The vacuum insulation may further include an adsorbent for adsorbing a gas and water to stably maintain a vacuum state. However, the insulation is not limited to the above-mentioned foaming insulation or vacuum insulation, and may include various materials capable of being used for insulation.

The "storage compartment" may include a space defined by the inner case. The storage compartment may further include the inner case defining the space. Various items such as food, medicine, and cosmetics may be stored in the storage compartment, one side of the storage compartment may open to enable a user to put in or take out items.

The refrigerator may include one or more storage compartments. In a case in which two or more storage compartments are formed in the refrigerator, the respective storage compartments may have different purposes of use, and may be maintained at different temperature. To this end, each storage compartment may be partitioned off from the others by a partition wall containing an insulation.

The storage compartment may be maintained within an appropriate temperature range according to a purpose of use, and include a "refrigerating room", a "freezing room", and a "temperature conversion room" according to purposes of use and/or temperature ranges. The refrigerating room may be maintained at appropriate temperature to keep food refrigerated, and the freezing room may be maintained at appropriate temperature to keep food frozen. The "refrigerating" may be keeping food cold without freezing the food, for example, the refrigerating room may be maintained at a range of 0 degrees Celsius to -7 degrees Celsius. The "freezing" may be freezing food or keeping food frozen, for example, the freezing room may be maintained at a range of -20 degrees Celsius to -1 degree Celsius. The temperature conversion room may be used as any one of a refrigerating room or a freezing room according to or regardless of a user's selection.

The storage compartment may also be called various other terms, such as "vegetable room", "freshness room", "cooling room", and "ice-making room", in addition to "refrigerating room", "freezing room", and "temperature conversion room", and the terms, such as "refrigerating room", "freezing room", "temperature conversion room", etc., as used below need to be understood to represent storage compartments having the corresponding purposes of use and the corresponding temperature ranges.

The refrigerator according to an embodiment of the disclosure may include at least one door configured to open or close the open side of the storage compartment. The respective doors may be provided to open and close one or more storage compartments, or a single door may be provided to open and close a plurality of storage compartments. The door may be rotatably or slidably mounted on the front of the main body.

The "door" may seal the storage compartment in a closed state. The door may include an insulation, like the main body, to insulate the storage compartment in the closed state.

According to an embodiment, the door may include an outer door plate forming the front surface of the door, an inner door plate forming the rear surface of the door and facing the storage compartment, an upper cap, a lower cap, and a door insulation provided therein.

A gasket may be provided on the edge of the inner door plate to seal the storage compartment by coming into close contact with the front surface of the main body when the door is closed. The inner door plate may include a dyke that protrudes rearward to allow a door basket for storing items to be fitted.

According to an embodiment, the door may include a door body and a front panel that is detachably coupled to the front of the door body and forms the front surface of the door. The door body may include an outer door plate that forms the front surface of the door body, an inner door plate that forms the rear surface of the door body and faces the storage compartment, an upper cap, a lower cap, and a door insulator provided therein.

The refrigerator may be classified as French Door Type, Side-by-side Type, Bottom Mounted Freezer (BMF), Top Mounted Freezer (TMF), or One Door Refrigerator depending on the arrangement of the doors and the storage compartments.

The refrigerator according to an embodiment of the disclosure may include a cool air supply device for supplying cool air to the storage compartment.

The "cool air supply device" may include a machine, an apparatus, an electronic device, and/or a combination system thereof, capable of generating cool air and guiding the cool air to cool the storage compartment.

According to an embodiment of the disclosure, the cool air supply device may generate cool air through a cooling cycle including compression, condensation, expansion, and evaporation processes of refrigerants. To this end, the cool air supply device may include a cooling cycle device having a compressor, a condenser, an expander, and an evaporator to drive the cooling cycle. According to an embodiment of the disclosure, the cool air supply device may include a semiconductor such as a thermoelectric element. The thermoelectric element may cool the storage compartment by heating and cooling actions through the Peltier effect.

The refrigerator according to an embodiment of the disclosure may include a machine room where at least some components belonging to the cool air supply device are installed.

The "machine room" may be partitioned and insulated from the storage compartment to prevent heat generated from the components installed in the machine room from being transferred to the storage compartment. To dissipate heat from the components installed inside the machine room, the machine room may communicate with outside of the main body.

The refrigerator according to an embodiment of the disclosure may include a dispenser provided on the door to provide water and/or ice. The dispenser may be provided on the door to allow access by the user without opening the door.

The refrigerator according to an embodiment of the disclosure may include an ice-making device that produces ice. The ice-making device may include an ice-making tray that stores water, an ice-moving device that separates ice from the ice-making tray, and an ice-bucket that stores ice generated in the ice-making tray.

The refrigerator according to an embodiment of the disclosure may include a controller for controlling the refrigerator.

The "controller" may include a memory for storing and/or memorizing data and/or programs for controlling the refrigerator, and a processor for outputting control signals for controlling the cool air supply device, etc. according to the programs and/or data memorized in the memory.

The memory may store or record various information, data, commands, programs, and the like necessary for operations of the refrigerator. The memory may store temporary data generated while generating control signals for controlling components included in the refrigerator. The memory may include at least one of volatile memory or non-volatile memory, or a combination thereof.

The processor may control the overall operation of the refrigerator. The processor may control the components of the refrigerator by executing programs stored in memory. The processor may include a separate neural processing unit (NPU) that performs an operation of an artificial intelligence (AI) model. In addition, the processor may include a central processing unit (CPU), a graphics processor (GPU), and the like. The processor may generate a control signal to control the operation of the cool air supply device. For example, the processor may receive temperature information of the storage compartment from a temperature sensor, and generate a cooling control signal for controlling an operation of the cool air supply device based on the temperature information of the storage compartment.

Furthermore, the processor may process a user input of a user interface and control an operation of the user interface according to the programs and/or data memorized/stored in the memory. The user interface may be provided using an input interface and an output interface. The processor may receive the user input from the user interface. In addition, the processor may transmit a display control signal and image data for displaying an image on the user interface to the user interface in response to the user input.

The processor and memory may be provided integrally or may be provided separately. The processor may include one or more processors. For example, the processor may include a main processor and at least one sub-processor. The memory may include one or more memories.

The refrigerator according to an embodiment of the disclosure may include a processor and a memory for controlling all the components included in the refrigerator, and may include a plurality of processors and a plurality of memories for individually controlling the components of the refrigerator. For example, the refrigerator may include a processor and a memory for controlling the operation of the cool air supply device according to an output of the temperature sensor. In addition, the refrigerator may be separately equipped with a processor and a memory for controlling the operation of the user interface according to the user input.

A communication module may communicate with external devices, such as servers, mobile devices, and other home appliances via a nearby access point (AP). The AP may connect a local area network (LAN) to which a refrigerator or a user device is connected to a wide area network (WAN) to which a server is connected. The refrigerator or the user device may be connected to the server via the WAN.

The input interface may include keys, a touch screen, a microphone, and the like. The input interface may receive the user input and pass the received user input to the processor.

The output interface may include a display, a speaker, and the like. The output interface may output various notifications, messages, information, and the like generated by the processor.

Hereinafter, various embodiments according to the disclosure will be described in detail with reference to the accompanying drawings.

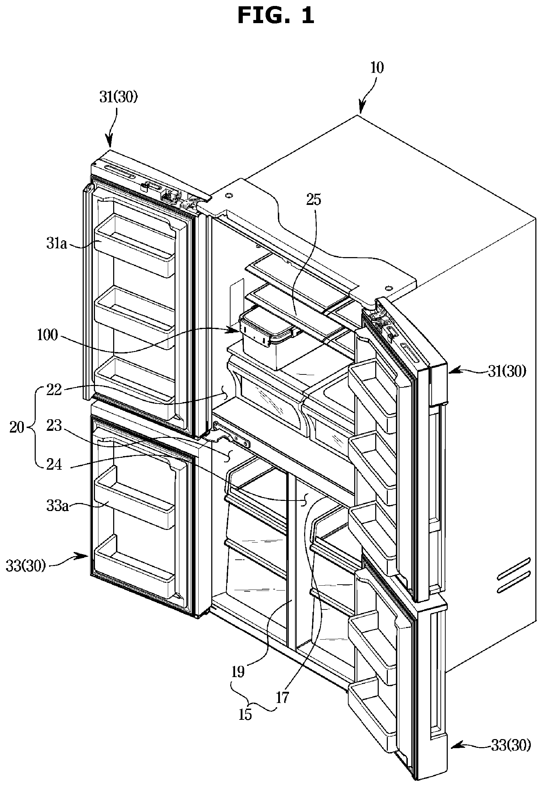

FIG. 1 illustrates a refrigerator according to an embodiment of the disclosure.

Referring to FIG. 1, the refrigerator may include a main body 10, a storage compartment 20 formed by partitioning the interior of the main body 10, and a door 30 provided to open or close the storage compartment 20.

The refrigerator may include a partition 15 that divides the storage compartment 20 into a plurality of compartments. The storage compartment 20 may be divided into a plurality of compartments by one or more partitions 15.

The refrigerator may include a plurality of shelves 25 and at least one food storage container 100 to store food in the storage compartment 20. As shown in FIG. 1, one food storage container 100 may be provided within the storage compartment 20. Alternatively, a plurality of food storage containers 100 may be provided within the storage compartment 20.

A variety of foods may be stored in the food storage container 100. For example, kimchi, vegetables, fruits, meat, fish, and the like may be stored inside the food storage container 100. The specific structure and function of the food storage container 100 will be described later.

The storage compartment 20 may be divided into a plurality of storage compartments 22, 23, and 24 by the partition 15. The partition 15 may include a first partition 17 that is horizontally coupled to the storage compartment 20 to divide the storage compartment 20 into a first storage compartment 22 and second storage compartments 23 and 24, and a second partition 19 that is vertically coupled to the second storage compartments 23 and 24 to divide the second storage compartments 23 and 24 into a first lower storage compartment 23 and a second lower storage compartment 24.

The partition 15, which has a T-shape by combining the first partition 17 and the second partition 19, may divide the storage compartment 20 into three spaces. Of the first storage compartment 22 and the second storage compartments 23 and 24 divided by the first partition 17, the first storage compartment 22 may be used as a refrigerating room, and the second storage compartments 23 and 24 may be used as a freezing room or freezing rooms.

The second storage compartments 23 and 24 may be used entirely as the freezing room, but the first lower storage compartment 23 may be used as the freezing room and the second lower storage compartment 24 may be used as the refrigerating room. Alternatively, the first lower storage compartment 23 may be used as the refrigerating room, and the second lower storage compartment 24 may be used as both the freezing room and the refrigerating room.

The division of the storage compartment 20 as described above is merely an example, and each storage compartment 22, 23, and 24 may be used differently from the configuration described above.

The refrigerating room 22 and the freezing rooms 23 and 24 may be opened or closed by the door 30 rotatably coupled to the main body 10, respectively.

The door 30 may include a pair of refrigerating room doors 31 rotatably coupled to the main body 10 to open or close the refrigerating room 22, and a pair of freezing room doors 33 rotatably coupled to the main body 10 to open or close the freezing rooms 23 and 24. The door that opens or closes the freezing rooms 23 and 24 may be a sliding door.

Door shelves 31a and 33a for placing food thereon may be provided on a rear surface of the pair of refrigerating room doors 31 and the pair of freezing room doors 33, respectively.

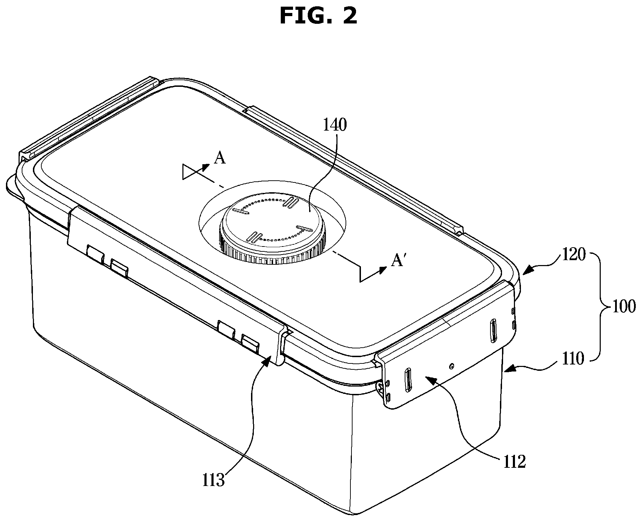

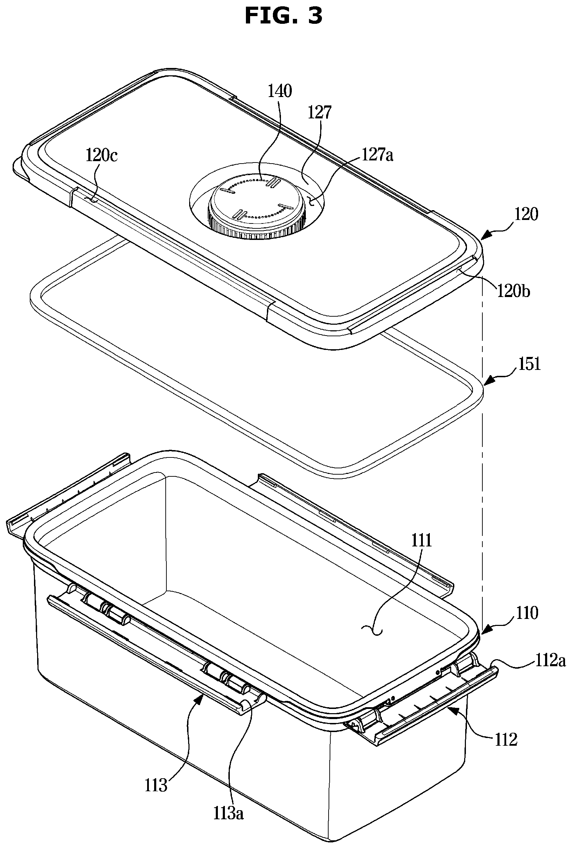

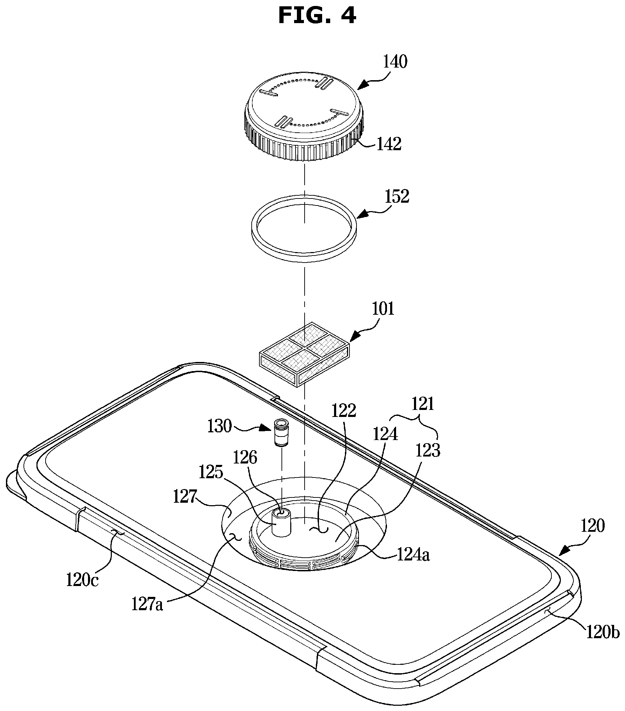

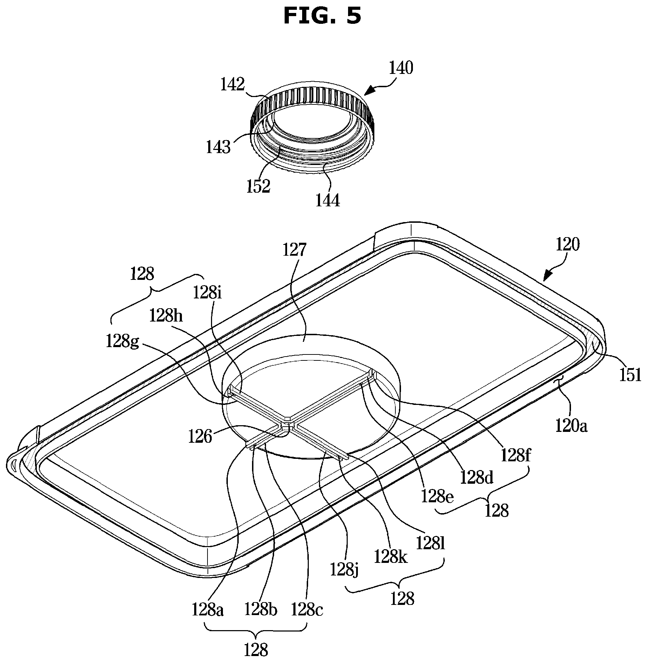

FIG. 2 shows the food storage container according to an embodiment of the disclosure. FIG. 3 is an exploded view of the food storage container according to an embodiment of the disclosure. FIG. 4 shows an exploded view of a case cover in the food storage container according to an embodiment of the disclosure. FIG. 5 shows a lower surface of a case cover and a receiving portion cover in the food storage container according to an embodiment of the disclosure.

Referring to FIGS. 2 and 3, the food storage container 100 according to an embodiment may include a case 110 that has an open side and forms a storage space 111 provided to receive food, and a case cover 120 provided to cover the open side. The case cover 120 may be detachably coupled to the case 110.

The case 110 may have a box shape with one open side. For example, as shown in FIGS. 2 and 3, the case 110 may have an open upper surface. The case 110 may form the storage space 111 provided to store food. The case 110 may be configured to include a metallic material. For example, the case 110 may be configured to include stainless steel to be resistant to corrosion, to be easy to clean, and to have a high thermal conductivity to facilitate rapid cooling.

The case 110 may include a first locking portion 112 and a second locking portion 113 arranged to lock or unlock the case cover 120. The first locking portion 112 and the second locking portion 113 may have substantially the same structure. The first locking portion 112 may be pivotably coupled to an upper end of a first side of the case 110. The second locking portion 113 may be pivotably coupled to an upper end of a second side that neighbors the first side of the case 110. The first side may refer to a short side of the case 110, and the second side may refer to a long side of the case 110. The first locking portion 112 may be provided to be inserted into a first locking groove 120b of the case cover 120, and the second locking portion 113 may be provided to be inserted into a second locking groove 120c of the case cover 120.

The case cover 120 may be provided to cover the one open side of the case 110. The case cover 120 may be coupled to the case 110 to cover the one open side of the case 110. For example, the case cover 120 may be coupled to the case 110 to cover an open upper surface of the case 110. The case cover 120 may be coupled to the case 110 to seal the storage space 111.

The case cover 120 may include the first locking groove 120b into which a first locking protrusion 112a of the case 110 is inserted. The case cover 120 may include the second locking groove 120c into which a second locking protrusion 113a of the case 110 is inserted.

After the case cover 120 is disposed to cover the one open side of the case 110, the first locking portion 112 may rotate to allow the first locking protrusion 112a to be inserted into the first locking groove 120b. Likewise, after the case cover 120 is disposed to cover the one open side of the case 110, the second locking portion 113 may rotate to allow the second locking protrusion 113a to be inserted into the second locking groove 120c. The first locking protrusion 112a is inserted into the first locking groove 120b and the second locking protrusion 113a is inserted into the second locking groove 120c, so that the case cover 120 may not be separated from the case 110. In other words, the case cover 120 may be locked to the case 110. When the case cover 120 is locked to the case 110, the storage space 111 of the case 110 may be sealed. When the storage space 111 of the case 110 is sealed, gas inside the storage space 111 may be prevented from leaking to the outside of the storage space 111.

Unlike as shown in FIGS. 2 and 3, the first locking portion and the second locking portion may be provided on the case cover 120 instead of the case 110. In this case, the first locking portion and the second locking portion may be provided to be rotatable with respect to the case cover 120, and the case 110 may include the first locking groove and the second locking groove. After the case cover 120 covers the open side of the case 110, the first locking portion may rotate to be inserted into the first locking groove, and the second locking portion may rotate to be inserted into the second locking groove. Accordingly, the case cover 120 may seal the storage space 111 of the case 110.

The food storage container 100 may include a case sealing member 151 provided between the case 110 and the case cover 120 to seal between the case 110 and the case cover 120. The case sealing member 151 may be inserted into a case sealing member groove 120a (see FIG. 5) formed on a lower surface of the case cover 120.

The case sealing member 151 may extend along an upper edge of the case 110. The case sealing member 151 may have a substantially rectangular ring shape. The case sealing member 151 may seal between the case 110 and the case cover 120 when the case cover 120 is locked to the case 110. Accordingly, when the case cover 120 is locked to the case 110, the storage space 111 may be sealed.

Referring to FIG. 4, the case cover 120 may include a receiving portion 121 that forms a separate space which is separate from the storage space 111. The receiving portion 121 may form a receiving space 122 that is separate from the storage space 111. A gas absorbent 101 may be received in the receiving space 122.

The receiving portion 121 may be formed by a portion of the case cover 120 being recessed toward the storage space 111. In other words, the receiving portion 121 may be formed by a portion of an upper surface of the case cover 120 recessed downwardly. The receiving portion 121 may include a bottom surface 123 recessed downwardly from the case cover 120 and a side surface 124 protruding upwardly from the bottom surface 123. The side surface 124 of the receiving portion 121 may be provided in a substantially cylindrical shape. A plurality of first coupling portions 124a may be provided on an outer face of the side surface 124 of the receiving portion 121 to be spaced apart along a helical direction. The plurality of first coupling portions 124a may be provided in the form of protrusions protruding outwardly from the outer face of the side surface 124 or in the form of grooves recessed inwardly from the outer face of the side surface 124. An inner face of the side surface 124 of the receiving portion may refer to a face forming a portion of the receiving space 122, and the outer face of the side surface 124 of the receiving portion may refer to a face forming a portion of a cover receiving space 127a, which will be described later. According to an embodiment, the plurality of first coupling portions 124a may protrude outwardly from the side surface 124 of the receiving portion.

The receiving portion may be formed by a portion of the case cover 120 protruding in an opposite direction of the storage space 111. In other words, the receiving portion may be formed such that at least a portion of the case cover protrudes upwardly. In this case, a bottom surface of the receiving portion may be a portion of the upper surface of the case cover 120. A side surface of the receiving portion may be a protruding portion that protrudes upwardly from an edge of a portion of the upper surface of the case cover 120. The protruding portion may include a boss-shaped structure. Furthermore, the case cover 120 may not include the receiving portion cover groove and the cover receiving space. A receiving portion cover 140 may seal the receiving space 122 by being coupled to the protruding portion protruding upwardly from the case cover 120.

The gas absorbent 101 may be accommodated in the receiving space 122 formed by the receiving portion 121. The gas absorbent 101 may be provided to physically adsorb a certain gas generated from the food stored in the storage space 111, or to cause a chemical reaction with the certain gas. There may be various examples of the gas absorbent 101. For example, the gas absorbent 101 may include calcium hydroxide (Ca(OH)2), sodium carbonate (Na2CO3), and magnesium hydroxide (Mg(OH)2), which react chemically with carbon dioxide (CO2). In addition, it is also possible to utilize porous substances or materials which use their physical properties to absorb gas.

The type and form of the gas absorbent 101 are not limited thereto. The gas absorbent 101 may include a packaging material that allows gas to pass through, and a desired gas absorption material received within the packaging material. The gas absorbent 101 may react chemically with a portion of a certain amount of gas and adsorb a portion of the remaining gas. When the gas absorbent 101 reacts physically or chemically with the certain amount of gas, the gas absorbent 101 is required to be replaced. To easily replace the gas absorbent 101, the receiving portion cover 140, which will be described later, may be detachably coupled to the receiving portion 121.

A discharge hole 126 may be formed in the receiving portion 121 to communicate with the storage space 111 and the receiving space 122. More particularly, the discharge hole 126 penetrating through the bottom surface 123 may be formed in the bottom surface 123 of the receiving portion 121. According to an embodiment, the receiving portion 121 may be provided with a boss portion 125 that forms the discharge hole 126. The boss portion 125 may extend the discharge hole 126 in a vertical direction. One end 126a of the discharge hole 126 may be formed at an upper end of the boss portion 125. The other end 126b of the discharge hole 126 may be formed at a lower end of the boss portion 125. The boss portion 125 may extend the discharge hole 126 from the one end 126a of the discharge hole to the other end 126b of the discharge hole. A valve 130 may be inserted into the boss portion 125. The valve 130 will be described later.

Referring to FIG. 4, the boss portion 125 may be formed to protrude upwardly from the periphery of the discharge hole 126. In this case, the boss portion 125 may be disposed within the receiving space 122.

Alternatively, the boss portion may be formed to protrude downwardly from the periphery of the discharge hole 126. In this case, the boss portion may be disposed within the storage space 111. The boss portion may be formed to protrude upwardly and downwardly from the periphery of the discharge hole 126. In this case, a portion of the boss portion may be disposed within the receiving space 122 and the remaining portion of the boss portion may be disposed within the storage space 111.

Referring to FIG. 4, the boss portion 125 and the discharge hole 126 formed by the boss portion 125 may be arranged to be biased towards one side of the receiving portion 121. The boss portion 125 may be spaced apart from the center of the receiving space 122. The boss portion 125 may be spaced apart from the center of the side surface of the receiving portion 124 such that the boss portion 125 is adjacent to a portion of the side surface of the receiving portion 124 having a cylindrical shape. This may be described as the boss portion 125 being disposed eccentrically with respect to the receiving space 122 or the receiving portion 121. Such an arrangement of the boss portion 125 and the discharge hole 126 may cause restrictions on the size and shape of the gas absorbent 101 accommodated in the receiving space 122 to be somewhat alleviated. When the boss portion 125 is disposed at the center or adjacent to the center of the receiving space 122, a plurality of gas absorbents may be disposed between the boss portion 125 and the side surface 124 of the receiving space 122. For example, four gas absorbents or two gas absorbents may be disposed between the boss 125 and the side surface 124 of the receiving portion. However, in this case, the size of the plurality of gas absorbents may be smaller than the gas absorbent 101 shown in FIG. 4, and thus, their service life may be shorter than the gas absorbent 101 shown in FIG. 4. Accordingly, due to the eccentric arrangement of the boss portion 125, the replacement cycle of the gas absorbent 101 may be increased, and the convenience of the user may be improved.

Because the boss portion 125 is eccentrically disposed to be adjacent to the side surface 124 of the receiving portion, it may be difficult to insert the receiving portion cover 140 between the boss portion 125 and the side surface 124 of the receiving portion. In other words, it may be difficult to form a protrusion or groove structure on the inner face of the side surface 124 of the receiving portion. When a plurality of protrusions or grooves are formed on the inner face of the side surface 124 of the receiving portion for coupling the receiving portion cover 140, the receiving portion cover 140 may need to be coupled between the boss portion 125 and the side surface 124 of the receiving portion. In this case, the boss portion 125 may not be disposed adjacent to the side surface 124 of the receiving portion, and the boss portion 125 may be arranged to be spaced apart from the side surface 124 of the receiving portion to provide space for the receiving portion cover 140 to be disposed. When the boss portion 125 is arranged to be spaced apart from the side surface 124 of the receiving portion, the boss portion 125 may be disposed at or adj acent to the center of the receiving portion 121, thereby reducing the size of the gas absorbent disposed in the receiving space 122.

According to an embodiment, the boss portion 125 may be disposed adjacent to the side surface 124 of the receiving portion, and the plurality of protrusions or grooves may be formed on the outer face of the side surface 124 of the receiving portion to prevent interference between the receiving portion cover 140 and the boss portion 125. Referring to FIG. 4 and FIG. 5, the plurality of first coupling portions 124a may be formed on the outer face of the side surface 124 of the receiving portion, and the plurality of second coupling portions 144 may be formed on the inner surface of the receiving portion cover 140. Each of the plurality of first coupling portions 124a may be provided in the form of a protrusion, and each of the plurality of second coupling portions 144 may be provided in the form of a groove. Alternatively, each of the plurality of first coupling portions 124a may be provided in the form of a groove and each of the plurality of second coupling portions 144 may be provided in the form of a protrusion.

The boss portion 125 and the discharge hole 126 may be arranged in the center of the receiving portion 121. In this case, the gas absorbent may include a hole into which the boss portion 125 is inserted, or may include a plurality of gas-absorbing agents having a smaller size than the gas absorbent 101 shown in FIG. 4.

Referring to FIG. 4, the food storage container 100 may include the receiving portion cover 140 coupled to the receiving portion 121 so as to seal the receiving space 122. The receiving portion cover 140 may be coupled to the receiving portion 121 to seal the receiving space 122. The receiving portion cover 140 may be detachably coupled to the receiving portion 121.

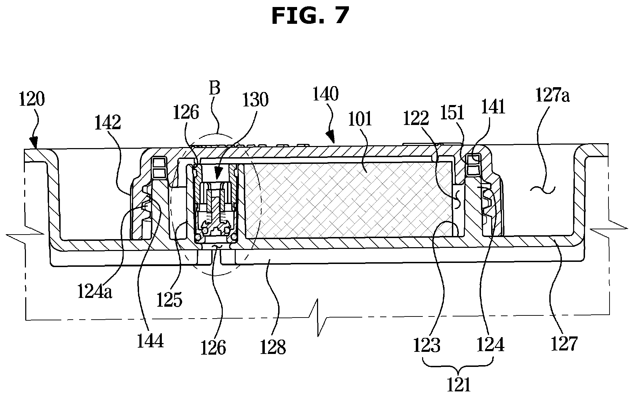

The receiving portion cover 140 may include a receiving portion sealing member 152 provided to seal between a top of the side surface 124 of the receiving portion 121 and a lower surface of the receiving portion cover 140. The lower surface of the receiving portion cover 140 may be a surface opposite to a side of the receiving portion cover covering an open upper surface of the receiving portion 121. The receiving portion sealing member 152 may have a shape corresponding to an upper surface of the side surface 124 of the receiving portion 121. The receiving portion sealing member 152 may have a ring shape. The receiving portion sealing member 152 may be inserted into a receiving portion sealing member groove 141 (see FIG. 7) formed on the lower surface of the receiving portion cover 140.

The receiving portion cover 140 may include a plurality of friction protrusions 142 protruding outwardly from the side surface of the receiving portion cover 140. The plurality of friction protrusions 142 may be arranged to be spaced apart along a circumferential direction of the side surface of the receiving portion cover 140. The plurality of friction protrusions 142 may increase friction between a user's hand and the receiving portion cover 140 when the user grips the receiving portion cover 140 to rotate the receiving portion cover 140. The plurality of friction protrusions 142 may allow the user to easily rotate the receiving portion cover 140. The plurality of friction protrusions 142 may improve the user's grip feeling when the user rotates the receiving portion cover 140. However, unlike as shown in the drawing, the receiving portion cover 140 may include a plurality of friction grooves recessed inwardly from the side surface of the receiving portion cover 140. In this case, the side surfaces of the receiving portion cover 140 located between the adjacent friction grooves and the friction grooves may function similarly to the friction protrusions 142 described above.

The case cover 120 may further include a receiving portion cover groove 127 provided to accommodate the receiving portion cover 140. The receiving portion cover groove 127 may form a cover receiving space 127a. The receiving portion cover groove 127, like the receiving portion 121, may be formed by a portion of the case cover 120 being recessed toward the storage space 111. The receiving portion cover groove 127 may be formed by a downwardly recessed portion outside the bottom surface 123 of the receiving portion 121 of the case cover 120. In other words, the receiving portion 121 may be provided inside the receiving portion cover groove 127.

At least a portion of the receiving portion cover 140 may be accommodated in the cover receiving space 127a formed by the receiving portion cover groove 127. More particularly, the side surface of the receiving portion cover 140 may be accommodated in the cover receiving space 127a. Since a predetermined space is provided between the side surface of the receiving portion cover 140 accommodated in the cover receiving space 127a and the side surface of the receiving portion cover groove 127, the user may insert his/her finger into the predetermined space to rotate the receiving portion 140. The receiving portion cover groove 127 may form a predetermined space in which the user may rotate the receiving portion cover 140.

Referring to FIG. 5, the case sealing member groove 120a may be formed on the lower surface of the case cover 120 into which the case sealing member 151 is inserted. A guide portion 128 may be provided on the lower surface of the case cover 120 to guide the gas inside the storage space 111 to the discharge hole 126. More particularly, the guide portion 128 may be provided on the lower surface of the receiving portion cover groove 127 formed by recessing downwardly from the case cover 120.

The guide portion 128 may be provided to guide the gas inside the storage space 111 to the discharge hole 126. According to an embodiment, the guide portion 128 may be provided in the form of a guide groove formed between a pair of guide walls. Alternatively, the guide portion may be formed by recessing a portion of the lower surface of the receiving portion cover groove 127 upwardly.

More particularly, the guide portion 128 may include first guide portions 128a, 128b, and 128c, second guide portions 128d, 128e, and 128f, third guide portions 128g, 128h, and 128i, and fourth guide portions 128j, 128k, and 128l. Since the structures of the first to fourth guide portion are the same, the first guide portions 128a, 128b, and 128c will be described as an example.

The first guide portions 128a, 128b, and 128c may include a first guide wall 128a and a second guide wall 128c extending parallel to each other in the same direction from the discharge hole 126. The first guide portions 128a, 128b, and 128c may include a first guide groove 128b formed between the first guide wall 128a and the second guide wall 128c. The first guide groove 128b may guide the gas flowing into the first guide groove 128b toward the discharge hole 126 in the shortest distance. Accordingly, the first guide portions 128a, 128b, and 128c may guide the gas inside the storage space 111 to the discharge hole 126.

Each of the plurality of guide portions 128 may extend laterally from the discharge hole 126 in different directions. Referring to FIG. 5, the first guide portions 128a, 128b, and 128c may extend from the discharge hole 126 in a first direction, and the second guide portions 128d, 128e, 128f may extend from the discharge hole 126 in a second direction opposite to the first direction. The third guide portions 128g, 128h, and 128i may extend from the discharge hole 126 in a third direction intersecting the first and second directions, and the fourth guide portions 128j, 128k, and 128l may extend from the discharge hole 126 in a fourth direction opposite to the third direction. Alternatively, the plurality of guide portions may extend radially from the discharge hole, and the number of guide portions is no limited thereto.

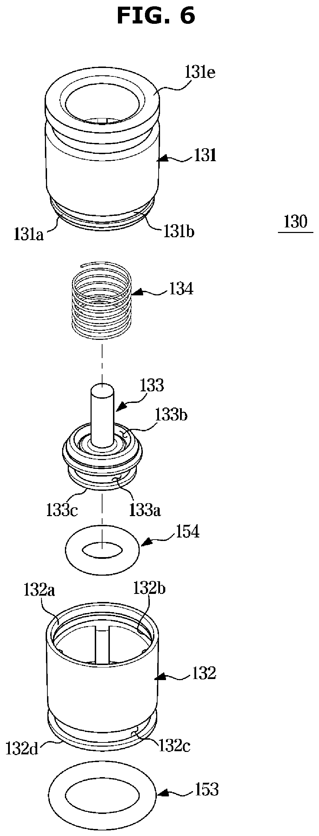

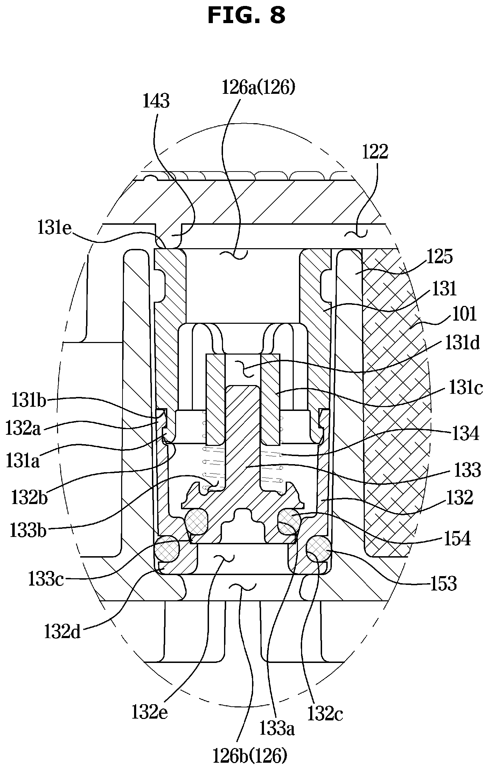

FIG. 6 is an exploded view of the valve in the food storage container according to an embodiment of the disclosure. FIG. 7 shows a cross-section along line A-A' of FIG. 1. FIG. 8 shows an enlarged view of B shown in FIG. 7.

A structure of the valve 130 according to an embodiment will be described with reference to FIG. 6. The valve 130 may be provided to guide the gas inside the storage space 111 to the receiving space 122. The valve 130 may be provided to allow the gas inside the storage space 111 to move into the storage space 122 but to prevent the gas inside the storage space 122 from moving into the storage space 111. The valve 130 may be a check valve that only allows gas to move in one direction.

The valve 130 may be provided to open the discharge hole 126 based on the pressure inside the storage space 111 exceeding a predetermined value. The valve 130 may be provided to open or close the discharge hole 126. The valve 130 may be elastically biased to close the discharge hole 126.

Referring to FIG. 6, the valve 130 may include a movable member 133 provided to open or close the discharge hole 126, a first housing 131 and a second housing 132 provided to accommodate the movable member 133 therein. The valve 130 may include an elastic member 134 provided to elastically bias the movable member 133 in one direction.

The first housing 131 may be provided to accommodate at least a portion of a shaft portion of the movable member 133. The first housing 131 may include a shaft support portion 131c provided to form a shaft hole 131d into which the shaft portion of the movable member 133 is inserted.

The first housing 131 may include a first coupling protrusion 131a and a first coupling groove 131b provided for coupling with the second housing 132. The first coupling protrusion 131a may be formed along a lower edge of the first housing 131 and may protrude outwardly from an outer surface of the first housing 131. The first coupling groove 131b may be formed above the first coupling protrusion 131a, and may be formed by the outer surface of the first housing 131 being further recessed inwardly.

An upper surface 131e of the first housing 131 may be provided to be pushed downward by a pressing protrusion 143 (see FIG. 8) of the receiving portion cover 140.

The second housing 132 may be provided to accommodate at least a portion of the movable member 133. The second housing 132 may include a second coupling groove 132b into which the first coupling protrusion 131a is inserted. The second housing 132 may include a second coupling protrusion 132a that is provided to be inserted into the first coupling groove 131b. The second coupling protrusion 132a may be formed along an upper edge of the second housing 132 and may protrude inwardly from an inner surface of the second housing 132. The second coupling groove 132b may be formed below the second coupling protrusion 132a, and may be formed by the inner surface of the second housing 132 being further recessed outwardly.

The second housing 132 may include a first flange portion 132d having a diameter larger than the diameter of the discharge hole 126 so as not to penetrate the discharge hole 126, and a first sealing member groove 132c formed above the first flange portion 132d. A first sealing member 153, which will be described later, may be inserted into the first sealing member groove 132c.

A housing hole 132e may be formed on a lower surface of the second housing 132. The movable member 133 may open the housing hole 132e as it moves upwardly, and may close the housing hole 132e as it moves downwardly. The housing hole 132e formed on the lower surface of the second housing 132 is connected to the discharge hole 126, so that the discharge hole 126 may be opened as the movable member 133 moves upwardly, and the discharge hole 126 may be closed as the movable member 133 moves downwardly.

The movable member 133 may include a shaft portion extending in the vertical direction and having a cylindrical shape, an elastic member support portion 133b provided below the shaft portion, a second sealing member groove 133a, and a second flange portion 133c. One side of the elastic member 134 may be inserted into the elastic member support portion 133b. A second sealing member 154, which will be described later, may be inserted into the second sealing member groove 133a. The second flange portion 133c may have a diameter larger than the diameter of the housing hole 132e of the second housing 132 so as not to penetrate the housing hole 132e. Accordingly, although the movable member 133 is elastically biased to move downward by the elastic member 134, the movable member 133 may not be allowed to penetrate the housing hole 132e of the second housing 132. When the movable member 133 moves downward by the elastic member 134, the movable member 133 may close the housing hole 132e of the second housing 132. As described above, the movable member 133 may close the discharge hole 126 by closing the housing hole 132e of the second housing 132, and may open the discharge hole 126 by opening the housing hole 132e.

The elastic member 134 may be arranged between the first housing 131 and the movable member 133. A first side of the elastic member 134 may be attached to the first housing 131, and a second side of the elastic member 134 may be attached to the elastic member support portion 133b of the movable member 133. The elastic member 134 may provide an elastic force to the movable member 133 to allow the movable member 133 to move downward. The elastic member 134 may elastically bias the movable member 133 downward. The elastic member 134 may be configured to accumulate an elastic force as the movable member 133 moves upwardly. The elastic member 134 may include a compression spring.

Referring to FIGS. 5 and 7, the receiving portion cover 140 may include a plurality of second coupling portions 144 provided to be coupled to the plurality of first coupling portions 124a formed on the side surface 124 of the receiving portion 121. The plurality of second coupling portions 144 may be formed on an inner surface of the receiving portion cover 140 to correspond to the plurality of first coupling portions 124a. The plurality of second coupling portions 144 may extend in the helical direction from the inner surface of the receiving portion cover 140. The plurality of second coupling portions 144 may include both protrusions and grooves extending in the helical direction from the inner surface of the receiving portion cover 140. The receiving portion cover 140 may be coupled to the case cover 120 by rotating the plurality of second coupling portions 144 in a first direction with respect to the plurality of first coupling portions 124a. The receiving portion cover 140 may be removed from the case cover 120 by rotating the plurality of second coupling portions 144 with respect to the plurality of first coupling portions 124a in a second direction opposite to the first direction.

Referring to FIG. 8, a process in which the valve 130 opens the discharge hole 126 based on the pressure inside the storage space 111 exceeding a predetermined value will be described.

According to an embodiment, the valve 130 may be configured to open the discharge hole 126 when the pressure inside the storage space 111 is at a first pressure, and the case cover 120 may be configured to separate from the case 110 when the pressure inside the storage space 111 is at a second pressure.

According to an embodiment, the first pressure may be set lower than the second pressure. For example, the first pressure may be approximately 1.04 atmospheres and the second pressure may be approximately 1.1 atmospheres. Accordingly, when the pressure inside the storage space 111 increases due to off-gassing from the food stored in the storage space 111, the valve 130 may open the discharge hole 126 before the case cover 120 is separated from the case 110. Upon opening the discharge hole 126, the gas inside the storage space 111 may pass through the discharge hole 126 and move to the gas absorbent 101 accommodated inside the receiving space 122. A portion of the gas that has moved to the gas absorbent 101 may be physically absorbed by the gas absorbent 101, and a portion of the remaining gas may be removed by undergoing a chemical reaction with the gas absorbent 101.

As described above, the receiving portion 121 may include the boss portion 125 forming the discharge hole 126. The boss portion 125 may extend the discharge hole 126 in the vertical direction. The one end 126a of the discharge hole may be formed at the upper end of the boss portion 125, and the other end 126b of the discharge hole may be formed at the bottom end of the boss portion 125.

The valve 130 described above may be accommodated inside the boss portion 125. The pressing protrusion 143 of the receiving portion cover 140 may press at least a portion of the upper surface 131e of the first housing 131 so that the valve 130 inserted into the boss portion 125 is not separated from the boss portion 125.

The first sealing member 153 may seal between the second housing 132 and the boss portion 125. The second sealing member 154 may seal between the movable member 133 and the second housing 132. In other words, the first sealing member 153 and the second sealing member 154 may double seal the housing hole 132e formed on the lower surfaces of the boss portion 125 and the second housing 132. Accordingly, when the valve 130 closes the discharge hole 126, the gas inside the storage space 111 may not pass through the discharge hole 126. As a result, the inside of the storage space 111 may be sealed.

The food stored inside the storage space 111 may generate different gases depending on the type thereof.

For example, for kimchi stored in the storage space 111, carbon dioxide (CO2) is released from the kimchi as it ages. The kimchi undergoes fermentation by microorganisms even during refrigerated storage, and the fermentation continues to generate carbon dioxide from the kimchi. As the generation of carbon dioxide continues, the pressure inside the storage space 111 may increase and the gas inside the storage space 111 may leak to the outside. As a result, an odor of the kimchi may be transferred to the inside of the storage compartment 20 and to other foods in the storage compartment 20, which may cause discomfort to the user.

However, looking at changes in the proliferation of lactic acid bacteria during the aging process of kimchi, heterofermentative lactic acid bacteria Leuconostoc mesenteroides and Lactobacillus brevis multiply abundantly in the early stages of fermentation, producing lactic acid, ethanol, carbon dioxide, and the like. This may cause the kimchi to become acidic, and the internal conditions of the kimchi to become anaerobic, which plays an important role in suppressing the growth of aerobic bacteria. In other words, carbon dioxide generated during the fermentation process of the kimchi serves a negative function of increasing the pressure inside the storage space 111 and thus leaking the smell of kimchi, while also serving a positive function of enhancing the flavor of kimchi. Therefore, it is undesirable to remove completely or as much as possible the carbon dioxide within the storage space 111. The food storage container 100 according to an embodiment may prevent the gas inside the storage space 111 from leaking to the outside of the food storage container 100 while maintaining an appropriate concentration of carbon dioxide inside the storage space 111.

In the case in which the gas generated from the food stored in the storage space 111 is carbon dioxide (CO2), the gas absorbent 101 may be calcium hydroxide (Ca(OH)2). In this case, the defined chemical reaction may be Ca(OH)2 + CO2 -> CaCO3 + H2O, i.e., water (H2O) is produced due to the chemical reaction of carbon dioxide and calcium hydroxide, and the pressure inside the receiving space 122 may be reduced. When water is produced by a chemical reaction with gas and a gas absorbent, a silica gel, a zeolite, or the like may be placed inside the receiving space 122 to reduce the moisture content inside the receiving space 122.

Furthermore, when storing fruits such as apples or potatoes in the storage space 111 instead of kimchi, an ethylene eliminator may be placed in the receiving space 122 instead of calcium hydroxide.

Furthermore, when storing meat in the storage space 111, it is important to remove oxygen, so an oxygen concentration reduction filter may be placed in the receiving space 122.

Referring to FIG. 8, when the pressure inside the storage space 111 reaches a predetermined value, the gas inside the storage space 111 may cause the valve 130 to open. More particularly, when the gas entering the discharge hole 126 presses the movable member 133 upwardly beyond the elastic force of the elastic member 134, the movable member 133 may move upward. As described above, when the movable member 133 moves upward, the discharge hole 126 may be opened. When the discharge hole 126 is opened, the gas inside the storage space 111 may move through the discharge hole 126 and into the receiving space 122. Since the gas absorbent 101 is accommodated in the receiving space 122, the gas moving into the receiving space 122 may be absorbed by the gas absorbent 101 or may undergo a defined chemical reaction with the gas absorbent 101.

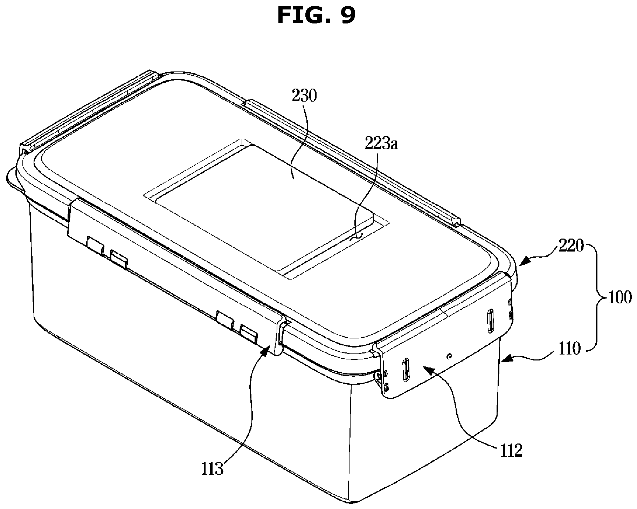

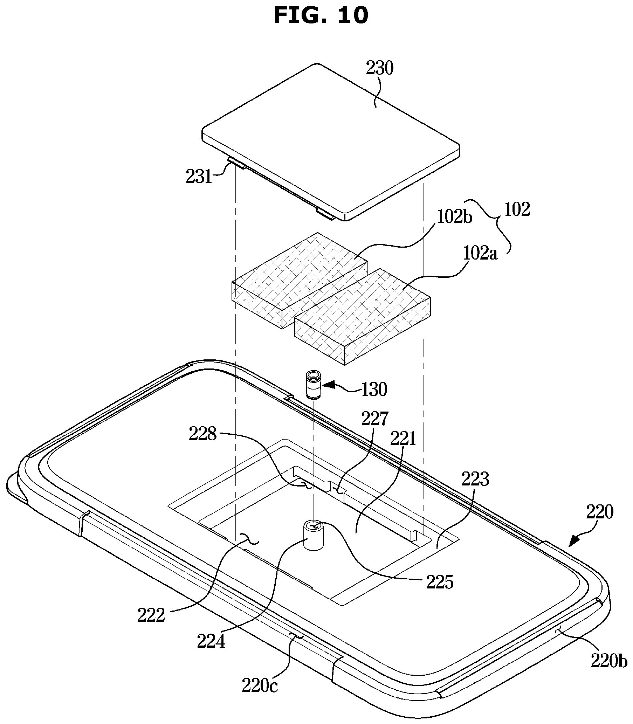

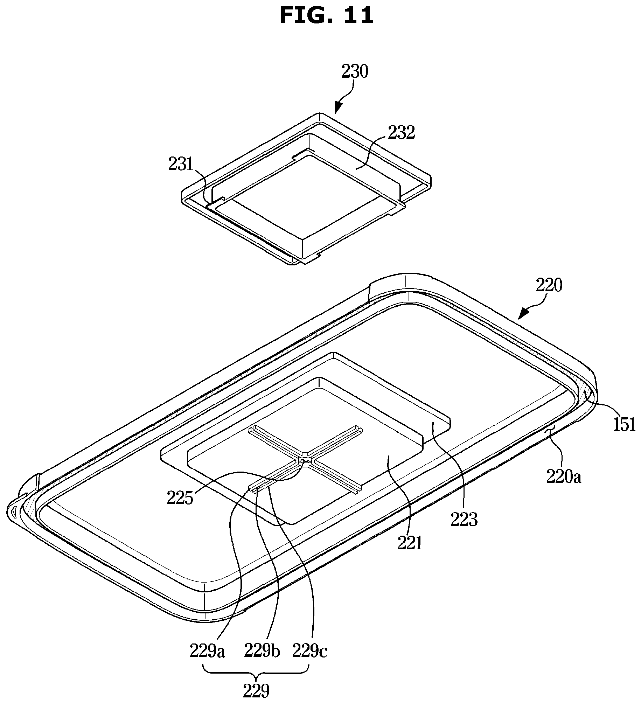

FIG. 9 shows a food storage container according to an embodiment of the disclosure. FIG. 10 is an exploded view of the case cover in the food storage container according to an embodiment of the disclosure. FIG. 11 shows the bottom surface of the case cover and the receiving portion cover in the food storage container according to an embodiment of the disclosure.

Referring to FIGS. 9 to 11, the food storage container 100 may include the case 110 having substantially the same structure as the case 110 described above, and a case cover 220 provided to cover one open surface of the case 110, a receiving portion cover 230 detachably coupled to the case cover 220.

Referring to FIGS. 9 and 10, the case cover 220 may include a first locking groove 220b and a second locking groove 220c. The case cover 220 may include a receiving portion 221 forming a receiving space 222. The receiving portion 221 may include a boss portion 224 forming a discharge hole 225. In addition, the receiving portion 221 may include an insertion hole 227 provided through which a sliding protrusion 231 of the receiving portion cover 230, which will be described later, passes, and a sliding groove 228 provided to guide sliding of the sliding protrusion 231 passing through the insertion hole 227. A receiving portion cover groove 223 may be formed on the outside of the receiving portion 221 to provide a predetermined space 223a for the user to grip and slide the receiving portion cover 230.

Referring to FIG. 10, the receiving space 222 may be formed by a portion of an upper surface of the case cover 220 being recessed downwardly. The downwardly recessed portion of the upper surface of the case cover 220 may form the receiving space 222 with an open upper surface. In this case, the receiving portion cover 230 may be provided to cover the open upper surface of the receiving space 222.

Alternatively, the receiving space may be formed by a portion of a lower surface of the case cover 220 being recessed upwardly. The upwardly recessed portion of the lower surface of the case cover 220 may form the receiving space with an open lower surface. In this case, the receiving portion cover 230 may be provided to cover the open lower surface of the receiving space.

A pair of gas absorbents 102 may be accommodated in the receiving space 222. The pair of gas absorbents 102 may include a first gas absorbent 102a and a second gas absorbent 120b. The first gas absorbent 102a and the second gas absorbent 102b may be provided to react with the same gas or may be provided to react with different gases.

Referring to FIG. 11, the case cover 220 may include a guide portion 229. The guide portion 229 may be provided to guide the gas inside the storage space 111 to the discharge hole 225. The guide portion 229 may be formed on a lower surface of the receiving portion 221. According to an embodiment, the guide portion 229 may include a first guide wall 229a, a second guide wall 229c, and a first guide groove 229b. Alternatively, the guide portion may include a guide groove formed by recessing upwardly from the lower surface of the receiving portion.

The case cover 220 may include a case sealing member groove 220a formed on a lower surface thereof and the case sealing member 151 inserted into the case sealing member groove 220a.

The receiving portion cover 230 may include a coupling rib 232 protruding downwardly from the lower surface of the receiving portion cover 230, and the sliding protrusion 231 protruding outwardly from a lower end of the coupling rib 232.

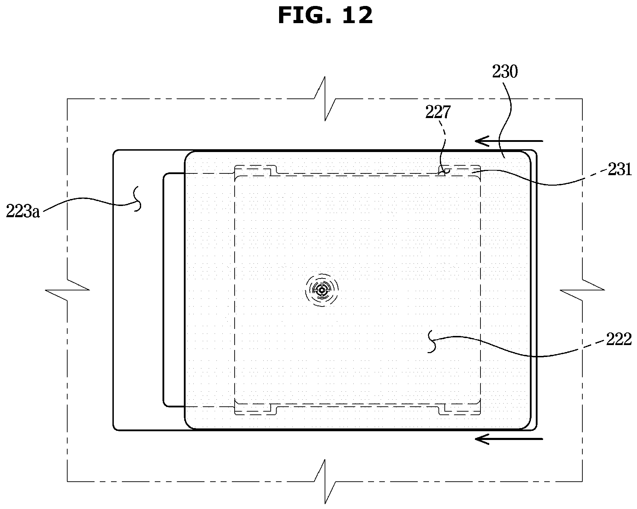

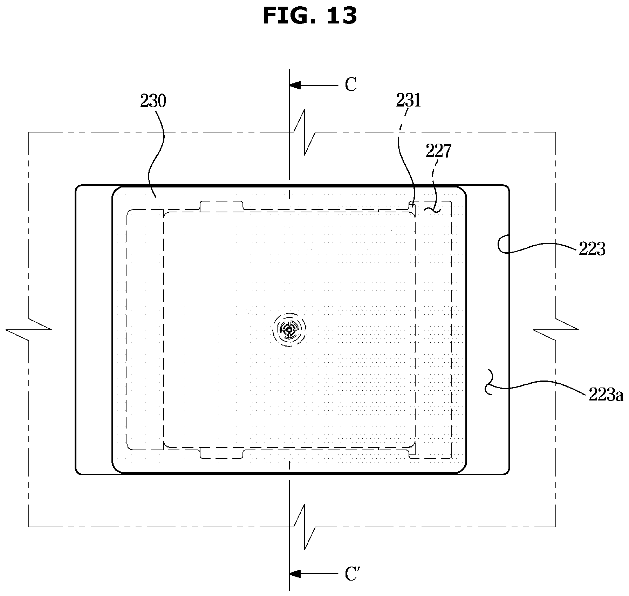

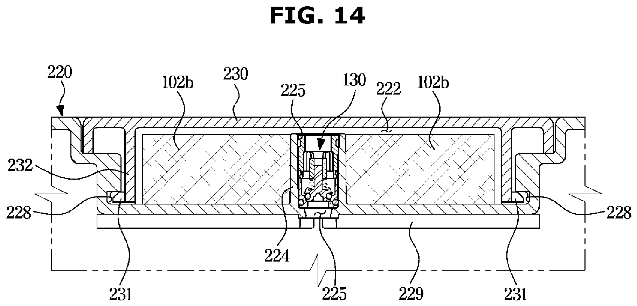

FIG. 12 shows the food storage container according to an embodiment of the disclosure, before the receiving portion cover slides with respect to the case cover. FIG. 13 shows the food storage container according to an embodiment of the disclosure, after the receiving portion cover slides with respect to the case cover. FIG. 14 shows a cross-section along line C-C' of FIG. 13.

Referring to FIGS. 12 to 14, in the food storage container 100 according to an embodiment of the disclosure, the receiving portion cover 230 may be slidably coupled to the case cover 220.

A sliding coupling process of the receiving portion cover 230 with the case cover 220 will be described as follows.

After positioning the receiving portion cover 230 so that the sliding protrusion 231 of the receiving portion cover 230 corresponds to the insertion hole 227 of the case cover 220, the receiving portion cover 230 is moved so that the sliding protrusion 231 passes through the insertion hole 227. The receiving portion cover 230 may be moved in a direction closer to the case cover 220.

When the sliding protrusion 231 passes through the insertion hole 227 and is positioned to contact or be adjacent to the bottom surface of the receiving space 222, the receiving portion cover 230 may be slidable relative to the case cover 220 so that the sliding protrusion 231 is inserted into the sliding groove 228. With reference to FIG. 12, the receiving portion cover 230 may slide to the left side relative to the case cover 220.

When the receiving portion cover 230 slides with respect to the case cover 220, the sliding protrusion 231 may be inserted into the sliding groove 228. When the sliding protrusion 231 is inserted into the sliding groove 228, the sliding protrusion 231 may be prevented from leaving the sliding groove 228. More particularly, the sliding groove 228 may allow movement in a first direction in which the receiving portion cover 230 slides relative to the case cover 220 and a second direction opposite to the first direction, and may restrict movement in a third direction perpendicular to the first and second directions. With reference to FIG. 14, the sliding protrusion 231 inserted into the sliding groove 228 may be restricted from upward movement.

When the receiving portion cover 230 is slidably coupled to the case cover 220, the receiving space 222 may be sealed. In other words, the gas inside the receiving space 222 may not leak to the outside. As described above, when the pressure inside the storage space 111 exceeds the predetermined value due to the gas generated inside the storage space 111 of the case 110, the valve 130 may open the discharge hole 225. When the discharge hole 225 is opened, the gas inside the storage space 111 may be absorbed by the gas absorbent 102 inside the receiving space 222 or may undergo a defined chemical reaction with the gas absorbent 102.

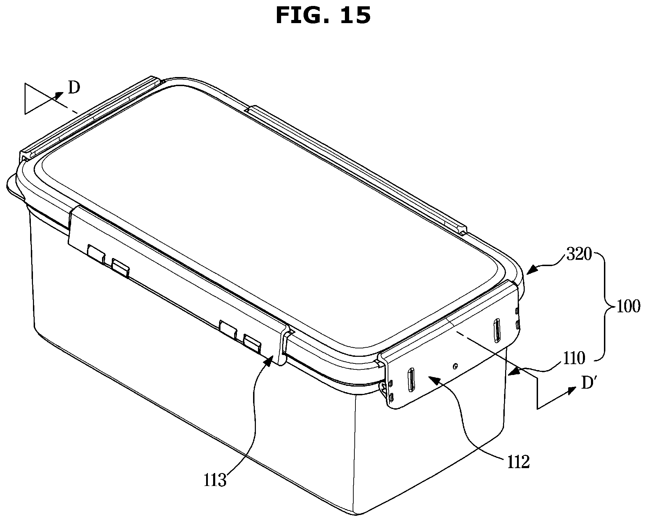

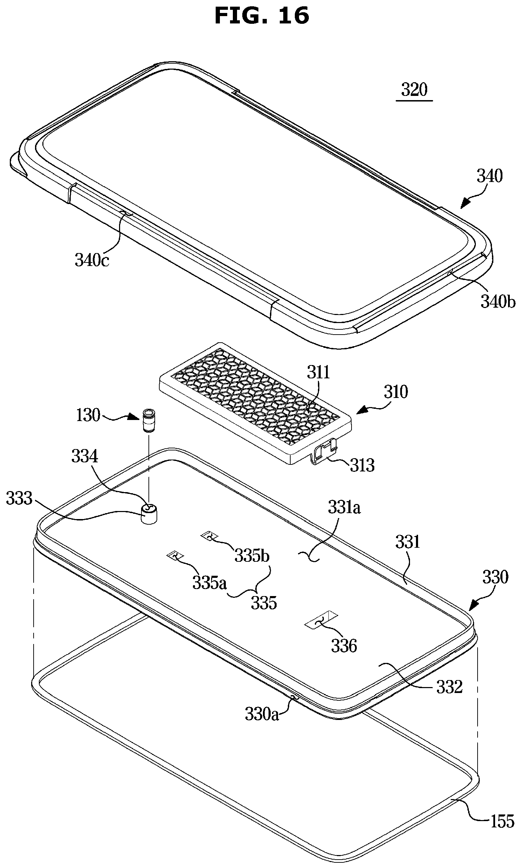

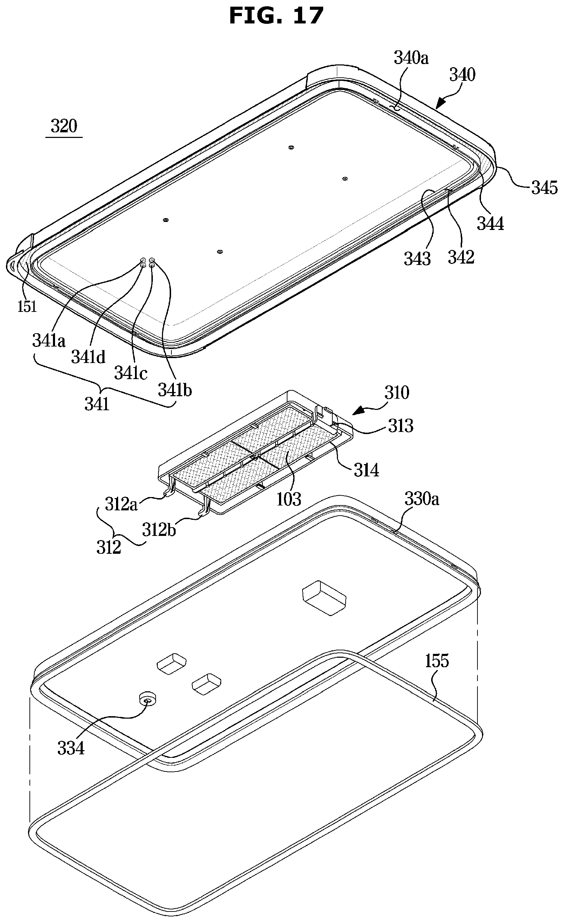

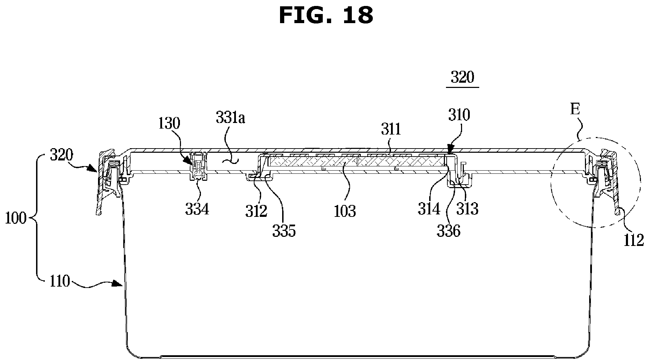

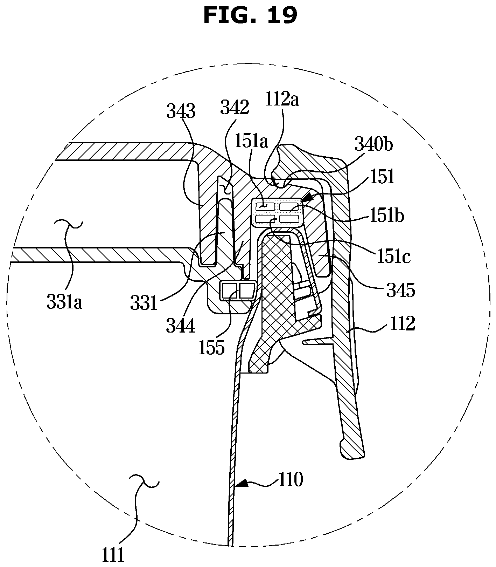

FIG. 15 shows a food storage container according to an embodiment of the disclosure. FIG. 16 is an exploded view of a case cover in the food storage container according to an embodiment of the disclosure. FIG. 17 shows FIG. 16 from another angle. FIG. 18 shows a cross-section along line D-D' of FIG. 15. FIG. 19 shows an example of an enlarged view of E shown in FIG. 18.

Referring to FIG. 15, the food storage container 100 may include the case 110 having substantially the same structure as the case 110 described above, and a case cover 320 provided to cover the open upper surface of the case 110. The food storage container 100 may include a first case sealing member 155 (see FIG. 16) and a second case sealing member 151 (see FIG. 17) provided to seal between the case 110 and the case cover.

Referring to FIGS. 16 and 17, the case cover 320 may include a first cover 330 provided to cover the open upper surface of the case 110, and a second cover 340 provided to cover an upper surface of the first cover 330. The second cover 340 is provided to be coupled to the case 110 and the first cover 330.

The first cover 330 may be provided to cover the open upper surface of the case 110. The first cover 330 may include a first case sealing member groove 330a provided to receive the first case sealing member 155. The first case sealing member groove 330a may be formed along an outer circumference of the first cover 330. The first case sealing member 155 having a ring shape may be inserted into the first case sealing member groove 330a.

The first cover 330 may protrude upwardly from an upper surface 332 of the first cover 330 and may include a rib 331 formed along an edge of the first cover 330. The rib 331 may form a receiving space 331a therein. The first cover 330 may be referred to as a receiving portion 330.

Insertion grooves 335 and an elastic protrusion groove 336 may be formed on the upper surface 332 of the first cover 330. Insertion protrusions 312 of a gas absorbent receiving member 310, which will be described later, may be inserted into the insertion grooves 335. An elastic protrusion 313 of the gas absorbent receiving member 310, which will be described later, may be inserted into the elastic protrusion groove 336. The insertion grooves 335 may be formed by the upper surface 332 of the first cover 330 being recessed downwardly. The insertion grooves 335 may include a first insertion groove 335a and a second insertion groove 335b spaced apart from the first insertion groove 335a. The elastic protrusion groove 336, like the insertion grooves 335, may be formed by the upper surface 332 of the first cover 330 being recessed downwardly.

The first cover 330 may include a boss portion 333 forming a discharge hole 334. The valve 130 may be inserted into the boss portion 333.

According to an embodiment, the gas absorbent receiving member 310 may be detachably coupled to the first cover 330. The gas absorbent receiving member 310 may be provided to accommodate the gas absorbent 103 therein. The gas absorbent receiving member 310 may have a plurality of openings 311 formed on its upper surface to allow gas to move to the gas absorbent 103 accommodated in the gas absorbent receiving member 310. A pair of insertion protrusions 312 may be formed on one side of the gas absorbent receiving member 310. The pair of insertion protrusions 312 may include a first insertion protrusion 312a and a second insertion protrusion 312b. The first insertion protrusion 312a may be provided to extend downwardly and then protrude toward the outside of the gas absorbent receiving member 310. Likewise, the second insertion protrusion 312b may be provided to extend downwardly and then protrude toward the outside of the gas absorbent receiving member 310.

The gas absorbent receiving member 310 may include the elastic protrusion 313 provided on the other side of the gas absorbent receiving member 310. The elastic protrusion 313 may be provided to accumulate an elastic force when inserted into the elastic protrusion groove 336. The elastic protrusion 313 can be pulled out from the elastic protrusion groove 336 by applying a force greater than the elastic force to the elastic protrusion 313 inserted into the elastic protrusion groove 336.

The gas absorbent receiving member 310 may be coupled to the first cover 330 or may be separated from the first cover 330 by inserting the first insertion protrusion 312a, the second insertion protrusion 312b, and the elastic protrusion 313 into or removing from the first insertion groove 335a, the second insertion groove 335b, and the elastic protrusion groove 336, respectively.

The gas absorbent receiving member 310 may include a gas absorbent support portion 314 provided to support at least a portion of the gas absorbent 103. The gas absorbent 103 may be replaceably inserted into the gas absorbent support portion 314.

Referring to FIGS. 16 and 17, the second cover 340 may include a first locking groove 340b and a second locking groove 340c. The second cover 340 may be provided to cover the upper surface of the first cover 330. The second cover 340 may cover the upper surface of the first cover 330 to form the receiving space 331a between the first cover 330 and the second cover 340. The first cover 330 may cover the open upper surface of the case 110 and the second cover 340 may cover the upper surface of the first cover 330, and thus the receiving space 331a may be sealed. The receiving space 331a may be separated from the storage space 111 such that no gas may not flow in or out without opening the valve 130. The receiving space 331a may be sealed to prevent gas from leaking out of the receiving space 331a or from flowing in from the outside of the receiving space 331a. The second cover 340 may be also referred to as a receiving portion cover 340.

The second cover 340 may include a second case sealing member groove 340a formed on a lower surface thereof. The second case sealing member 151 may be inserted into the second case sealing member groove 340a. A plurality of pressing protrusions 341 may be provided on a lower surface of the second cover 340 to press an upper surface of the valve 130. The plurality of pressing protrusions 341 may include a first pressing protrusion 341a, a second pressing protrusion 341b, a third pressing protrusion 341c, and a fourth pressing protrusion 341d to press the upper surface of the valve 130 at four points spaced apart from each other. The plurality of pressing protrusions 341 may prevent the valve 130 from being pulled out of the boss portion 333. The plurality of pressing protrusions 341 may be arranged to be spaced apart from each other to allow gas passing through the discharge hole 334 to move into the receiving space 331a when the valve 130 is opened. In other words, gas may flow through a gap between the plurality of pressing protrusions 341.

The second cover 340 may include a rib groove 342 into which the rib 331 of the first cover 330 is inserted. The second cover 340 may include a first rib 343 and a second rib 344 provided to form the rib groove 342. The rib groove 342 may be formed between the first rib 343 and the second rib 344 provided on the outside of the first rib 343. The second case sealing member groove 340a may be formed between the second rib 344 and a third rib 345 provided on the outside of the second rib 344.

Referring to FIGS. 18 and 19, the food storage container 100 according to an embodiment of the disclosure may include the first case sealing member 155 and the second case sealing member 151 to provide a double seal between the storage space 111 and an exterior of the case 110.

The first case sealing member 155 may seal between an inner surface of the case 110 and an outer surface of the first cover 330. The rib groove 342 and the rib 331 may be provided on an upper side of the first case sealing member 155. In order for the gas inside the storage space 111 to flow into the receiving space 331a, the gas is required to pass through the first case sealing member 155, the second rib 344, the rib 331, and the first rib 343. As a result, it is possible to prevent the gas inside the storage space 111 from bypassing the valve 130 and flowing into the receiving space 331a.

The second case sealing member 151 may seal between an upper surface of the first case 110 and the second cover 340. The second case sealing member 151 may be provided between the second rib 344 and the third rib 345 of the second cover 340 to secondarily seal the gas passing through the first case sealing member 155. As described above, although the gas inside the storage space 111 passes through the first case sealing member 155, the double seal of the second case sealing member 151 may prevent the gas inside the storage space 111 from leaking directly out of the case 110 without travelling to the receiving space 331a.

Referring to FIG. 19, the second case sealing member 151 may have a space 151a formed therein, or a plurality of such spaces, to facilitate deformation of the second case sealing member 151 when an external force is applied to the second case sealing member 151. The space 151a may refer to a predetermined space formed inside the second case sealing member 151.

The second case sealing member 151 may include a horizontal support portion 151b that crosses the space 151a in a substantially horizontal direction, and a vertical support portion 151c that crosses the space 151a in a substantially vertical direction. The horizontal support portion 151b may connect both sides of the interior of the second case sealing member 151 forming the space 151a. The vertical support portion 151c may connect upper and lower surfaces of the second case sealing member 151 forming the space 151a. The horizontal direction may refer to a left-to-right direction with respect to FIG. 19, and the vertical direction may refer to an up-and-down direction with respect to FIG. 19.

The horizontal support portion 151b may be provided to prevent the second case sealing member 151 from being compressed too easily when the second case sealing member 151 is compressed in the horizontal direction. The formation of the horizontal support portion 151b may allow the force required to compress the second case sealing member 151 in the horizontal direction or the left-to-right direction to be greater.

The vertical support portion 151c may be provided to prevent the second case sealing member 151 from being compressed too easily when the second case sealing member 151 is compressed in the vertical direction. The formation of the vertical support portion 151c may allow the force required to compress the second case sealing member 151 in the vertical direction or the up-and-down direction to be greater.

If the second case sealing member 151 deforms too easily, a gap may form in a space on which the second case sealing member 151 is disposed. As a result, the second case sealing member 151 may not be able to faithfully perform its sealing function. To prevent such a situation, the second case sealing member 151 may include the horizontal support portion 151b and the vertical support portion 151c.

The case sealing member 151 shown in FIG. 3 and the case sealing member 151 shown in FIG. 11 may include the space 151a, the horizontal support portion 151b, and the vertical support portion 151c, in the same or similar arrangement as the second case sealing member 151 in FIG. 19 described above.

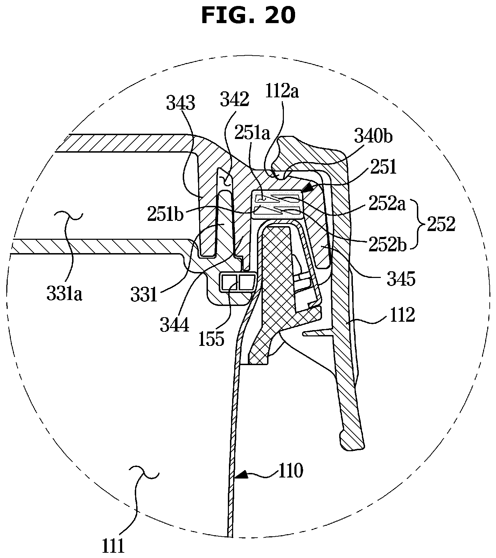

FIG. 20 shows an example of an enlarged view of E of FIG. 18 according to another embodiment of the disclosure.

Referring to FIG. 20, a case sealing member 251 according to another embodiment may have a space 251a formed therein, or a plurality of such spaces, to facilitate deformation of the case sealing member 251 when an external force is applied to the case sealing member 251. The space 251a may refer to a predetermined space formed inside the case sealing member 251.

The case sealing member 251 may include a horizontal support portion 251b that crosses the space 251a in the substantially horizontal direction. The horizontal support portion 251b may connect both sides of the interior of the case sealing member 251 forming the space 251a.

According to an embodiment, the case sealing member 251 may include an inclined support portion 252 that crosses the space 251a in the vertical direction. The inclined support portion 252 may extend across the space 251a in the vertical direction, but at an inclined angle. The inclined support portion 252 may extend in an oblique direction. In these example embodiments, crossing the space 251a at an incline in the "vertical direction" may refer to extending at an incline between surfaces that form the space 251a, and/or are located in the space 251a, and that face in the up-and-down direction. Therefore, the inclined support portion 252 may extend between surfaces of the space facing one another in the up-and-down direction.

Referring to FIG. 20, the case sealing member 251 may include a first inclined support portion 252a connecting an upper surface inside the case sealing member 251 forming the space 251a with the horizontal support portion 251b, and a second inclined support portion 252b connecting a lower surface inside the case sealing member 251 forming the space 251a with the horizontal support portion 251b.

An upper end of the first inclined support portion 252a connected to the upper surface inside the case sealing member 251 and an upper end of the second inclined support portion 252b connected to the horizontal support portion 251b may be arranged to be vertically spaced apart from each other. In other words, the upper end of the first inclined support portion 252a and the upper end of the second inclined support portion 252b may be arranged in a straight line extending in the vertical direction.

A lower end of the second inclined support portion 252b connected to the lower surface inside the case sealing member 251 and a lower end of the first inclined support portion 252a connected to the horizontal support portion 251b may be arranged to be vertically spaced apart from each other. In other words, the lower end of the first inclined support portion 252a and the lower end of the second inclined support portion 252b may be arranged in a straight line extending in the vertical direction.

The horizontal support portion 251b may be provided to prevent the case sealing member 251 from being compressed too easily when the case sealing member 251 is compressed in the horizontal direction. The formation of the horizontal support portion 251b may allow the force required to compress the case sealing member 251 in the horizontal direction or the left-to-right direction to be greater.

The inclined support portion 252 may be provided to prevent the case sealing member 251 from being compressed too easily when the case sealing member 251 is compressed in the vertical direction. The inclined support portion 252 may allow the force required to compress the case sealing member 251 in the vertical direction or the up-and-down direction to be greater than when the inclined support portion 252 is not formed within the case sealing member 251.

The inclined support portion 252 may allow the case sealing member 251 to be compressed more easily than a completely vertical support portion when the case sealing member 251 is compressed in the vertical direction. The inclined support portion 252 may allow the force required to compress the case sealing member 251 in the vertical direction or the up-and-down direction to be less compared to when the vertical support portion 151c shown in FIG. 19 is formed within the case sealing member.

By providing the inclined support portion 252 instead of the vertical portion 151c, the force required by the user to lock the case cover 120 to the case 110 may be reduced. After positioning the case cover 120 so that the case cover 120 covers the open side of the case 110, the amount of force required by the user to rotate the first locking portion 112 may be reduced. In addition, after positioning the case cover 120 so that the case cover 120 covers the open side of the case 110, the amount of force required by the user to rotate the second locking portion 113 may be reduced. The case sealing member 251 including the inclined support portion 252 may improve usability by reducing the amount of force required to couple the case cover 120 to the case 110. In other words, the convenience of use may be improved.

If the case sealing member 251 is deformed too easily, a gap may be formed in the space on which the case sealing member 251 is disposed. As a result, the case sealing member 251 may not be able to faithfully perform its sealing function. To prevent such a situation, the case sealing member 251 may include the horizontal support portion 251b and the inclined support portion 252.

The case sealing member 151 shown in FIG. 3 and the case sealing member 151 shown in FIG. 11 may include the space 251a, the horizontal support portion 251b, and the inclined support portion 252, in the same or similar arrangement as the case sealing member 251 in FIG. 20 described above.

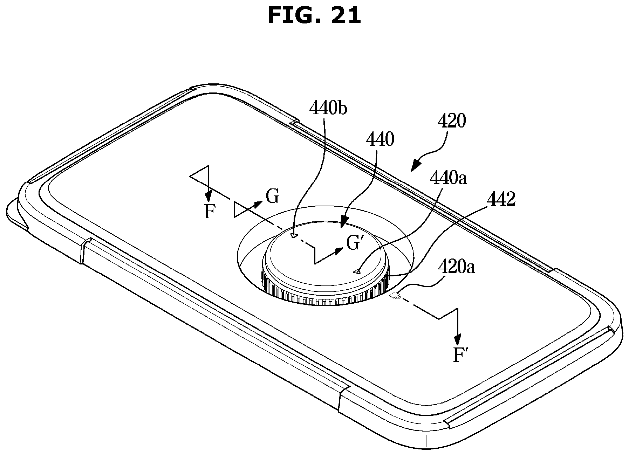

FIG. 21 shows a case cover of a food storage container according to another embodiment of the disclosure.

Referring to FIG. 21, a case cover 420 according to another embodiment may be coupled to the case 110 to cover the open side of the case 110 (see FIG. 3). A receiving portion cover 440 may be detachably coupled to the case cover 420.

The receiving portion cover 440 may include a friction pattern 442 formed on a side surface of the receiving portion cover 440. The friction pattern 442 may improve the user's grip feeling when rotating the receiving portion cover 440.

The friction pattern 442 may be formed along the circumferential direction of the side surface of the receiving portion cover 440. The friction pattern 442 may be formed by intersecting a plurality of protrusions and a plurality of grooves, but is not limited thereto. Different patterns may be formed on the side surface of the receiving portion cover 440 to increase friction with the user's hand or to improve the feeling of grip.

According to an embodiment, the case cover 420 and the receiving portion cover 440 may each be provided with an indicator. The indicator may be configured to visually indicate a position where the receiving portion cover 440 is coupled to the case cover 420. **In** particular, a first indicator 420a may be disposed on the case cover 420, and a second indicator 440a and a third indicator 440b may be disposed on the receiving portion cover 440.

When the second indicator 440a or the third indicator 440b formed on the upper surface of the receiving portion cover 440 is placed in a position corresponding to the first indicator 420a formed on the upper surface of the case cover 420, the user may visually identify that the receiving portion cover 440 is coupled to the case cover 420. As described above, the user may rotate the receiving portion cover 440 to couple the receiving portion cover 440 to the case cover 420. Once the first indicator 420a, the second indicator 440a, and the third indicator 440b are in a straight line, the user may visually perceive that the receiving portion cover 440 is coupled to the case cover 420 even though the receiving portion cover 440 is no longer rotated. The position of the second indicator 440a corresponding to the first indicator 420a may refer to a position where the first indicator 420a, the second indicator 440a, and the third indicator 440b are in a straight line. Similarly, the position of the third indicator 440b corresponding to the first indicator 420a may refer to a position where the first indicator 420a, the second indicator 440a, and the third indicator 440b lie on a straight line.

The first indicator 420a, the second indicator 440a, and the third indicator 440b may each be formed through at least one of various marking methods, including printing, affixing, engraving, and/or embossing.

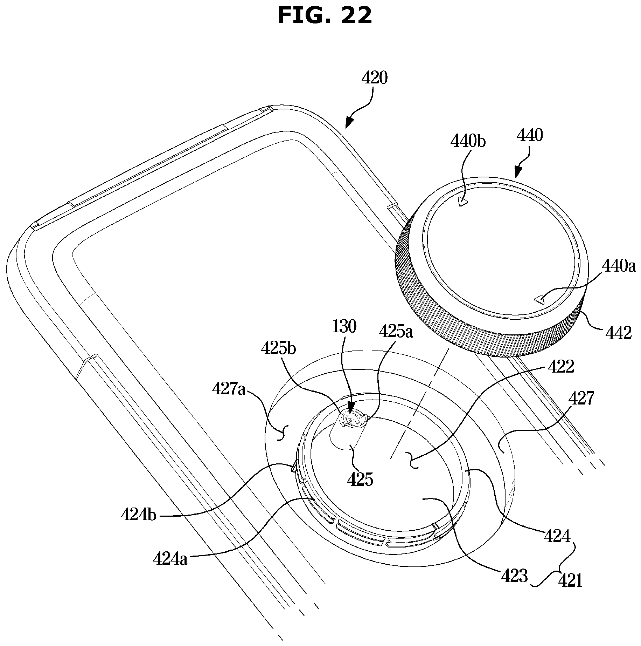

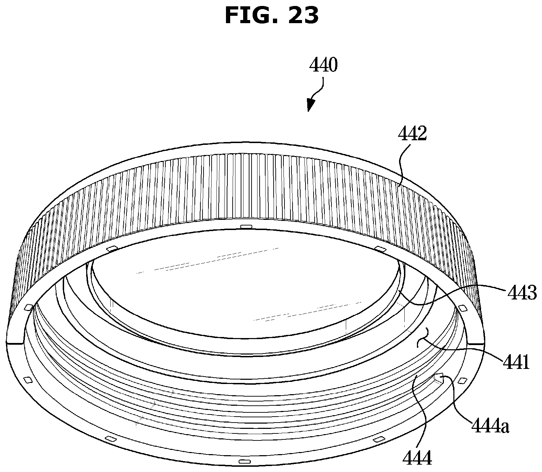

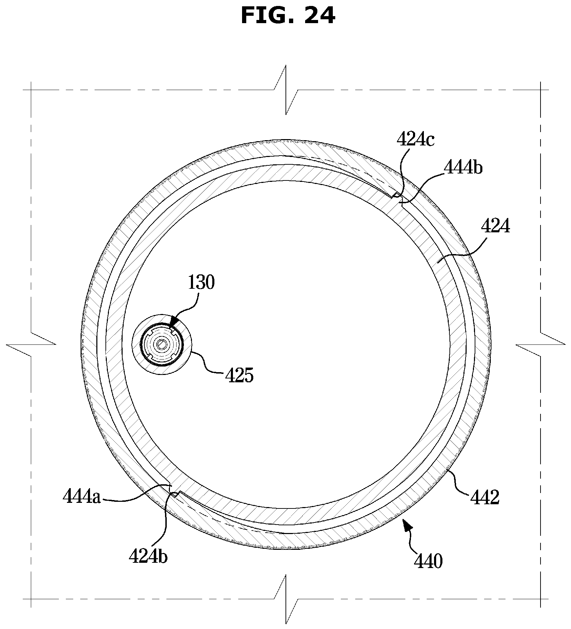

FIG. 22 shows a receiving portion cover detached from the case cover shown in FIG. 21. FIG. 23 shows a lower surface of the receiving portion cover shown in FIG. 22. FIG. 24 shows a cross section along line F-F' of FIG. 21.

Referring to FIG. 22, the case cover 420 may include a receiving portion 421 forming a receiving space 422. A gas absorbent may be accommodated in the receiving space 422.

The receiving portion 421 may be formed by a portion of the upper surface of the case cover 420 being recessed downwardly. The receiving portion 421 may include a bottom surface 423 recessed downwardly from the case cover 420, and a side surface 424 protruding upwardly from the bottom surface 423. The side surface 424 of the receiving portion 421 may be provided in a substantially cylindrical shape. A plurality of first coupling portions 424a may be provided on an outer face of the side surface 424 of the receiving portion 421 to be spaced apart along the helical direction. The plurality of first coupling portions 424a may be provided in the form of a protrusion protruding outwardly from the outer face of the side surface 424 of the receiving portion 421 or in the form of grooves recessed inwardly from the outer face of the side surface 424. An inner face of the side surface 424 of the receiving portion 421 may refer to a face forming a portion of the receiving space 422, and the outer face of the side surface 424 of the receiving portion 421 may be a portion of a cover receiving space 427a. According to an embodiment, the plurality of first coupling portions 424a may protrude outwardly from the side surface 424 of the receiving portion 421.

According to an embodiment, the receiving portion 421 may be provided with a boss portion 425 into which the valve 130 is inserted. The boss portion 425 may protrude upwardly from the bottom surface 423 of the receiving portion 421 and may have a substantially cylindrical shape. The boss portion 425 may include a first wall portion 425a having a relatively high height and a second wall portion 425b having a relatively low height. The second wall portion 425b may be disposed adjacent to the side surface 424 of the receiving portion 421. The second wall portion 425b may be arranged to form a space between the boss portion 425 and the receiving portion cover 440. The second wall portion 425b may refer to a portion of the boss portion 425 that is formed to be lower in height than the remaining portion of the boss portion 425. The second wall portion 425b may also be referred to as a stepped portion, a cut-out portion, an evaded portion, an outlet portion, or the like.

The case cover 420 may include a receiving portion cover groove 427 provided to accommodate the receiving portion cover 440. The receiving portion cover groove 427 may form the cover receiving space 427a. The receiving portion cover groove 427 may be formed by recessing downwardly a portion of an outer side of the bottom surface 423 of the receiving portion 421 in the case cover 420. In other words, the receiving portion 421 may be provided inside the receiving portion cover groove 427.

Referring to FIGS. 22 and 24, a first stopper 424b and a second stopper 424c may be provided on the side surface 424 of the receiving portion 421. The first stopper 424b and the second stopper 424c may be disposed on opposite sides of each other. In other words, the centers of the first stopper 424b, the second stopper 424c, and the bottom surface 423 of the receiving portion 421 may be arranged approximately in a straight line.

The first stopper 424b and the second stopper 424c may each be formed at a lower end of the side surface 424 of the receiving portion 421 or at a position adjacent to the lower end. The first stopper 424b and the second stopper 424c may each protrude outwardly from the side surface 424 of the receiving portion 421.

Referring to FIGS. 23 and 24, the receiving portion cover 440 may include a pressing protrusion 443. The pressing protrusion 443 may be formed on a lower surface of the receiving portion cover 440. The pressing protrusion 443 may be arranged to press the valve 130 when the receiving portion cover 440 is coupled to the case cover 420. The pressing protrusion 443 may protrude downwardly from the lower surface of the receiving portion cover 440 and may be provided in a ring shape.

A receiving portion sealing member groove 441 may be formed on the lower surface of the receiving portion cover 440 into which the receiving portion sealing member 152 (see FIG. 4) is inserted.

The receiving portion cover 440 may include a plurality of second coupling portions 444 arranged to be coupled to the plurality of first coupling portions 424a formed on the side surface 424 of the receiving portion 421. The plurality of second coupling portions 444 may be formed on the inner surface of the receiving portion cover 440 to correspond to the plurality of first coupling portions 424a. The plurality of second coupling portions 444 may extend in the helical direction from the inner surface of the receiving portion cover 440. The plurality of second coupling portions 444 may refer to both protrusions and grooves extending in the helical direction from the inner surface of the receiving portion cover 440. The receiving portion cover 440 may be coupled to the case cover 420 by rotating the plurality of second coupling portions 444 in the first direction with respect to the plurality of first coupling portions 424a. The receiving portion cover 440 may be separated from the case cover 420 by rotating the plurality of second coupling portions 444 in the second direction opposite to the first direction with respect to the plurality of first coupling portions 424a.

According to an embodiment, the receiving portion cover 440 may include a first locking protrusion 444a and a second engaging protrusion 444b. The first locking protrusion 444a and the second locking protrusion 444b may be arranged to contact the first stopper 424b or the second stopper 424c, respectively. When the receiving portion cover 440 rotates to be coupled to the case cover 420, the first locking protrusion 444a may contact the first stopper 424b or the second stopper 424c, and the second locking protrusion 444b may contact the second stopper 424c or the first stopper 424b. In response to the first locking protrusion 444a and the second locking protrusion 444b contacting the first stopper 424b or the second stopper 424c, respectively, rotation of the receiving portion cover 440 with respect to the case cover 420 may be restricted. In other words, when the first locking protrusion 444a and the second locking protrusion 444b contact the first stopper 424b or the second stopper 424c, respectively, the receiving portion cover 440 may no longer rotate in the first direction. The first indicator 420a, the second indicator 440a, and the third indicator 440c may visually indicate to the user the coupling position of the receiving portion cover 440, and the first and second locking protrusions 444a and 444b and the first and second stoppers 424b and 424c may indicate to the user the coupled position of the receiving portion cover 440 by physically restricting the rotation of the receiving portion cover 440.

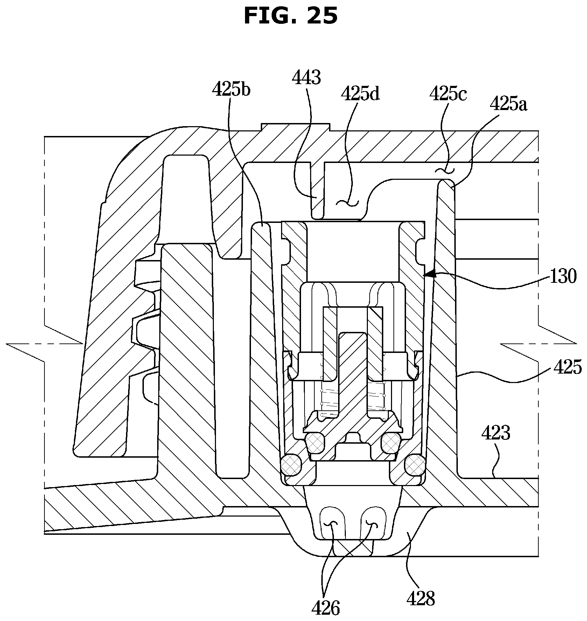

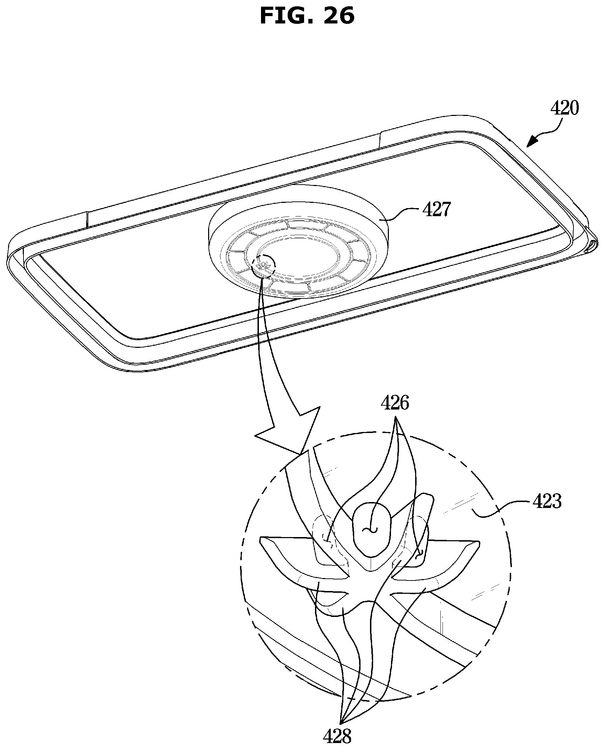

FIG. 25 shows a cross section along G-G' of FIG. 21. FIG. 26 shows a lower surface of the case cover shown in FIG. 21.

Referring to FIG. 25, the boss portion 425 of the case cover 420 according to an embodiment may include the first wall portion 425a and the second wall portion 425b.

The height of the first wall portion 425a may be higher than the height of the second wall portion 425b. The first wall portion 425a and the second wall portion 425b may be connected to each other. Approximately half of the boss portion 425 in the circumferential direction may be formed as the first wall portion 425a, and the remaining portion may be formed as the second wall portion 425b.

In the event that the gas absorbent, which may be provided in various forms, becomes trapped between the lower surface of the receiving portion cover 440 and the boss portion 425, the second wall portion 425b may prevent gas entering the valve 30 from the storage space 111 from being trapped between the receiving portion cover 440 and the boss portion 42 due to its inability to be discharged into the receiving space 422. At least a portion of the gas absorbent may be trapped in a space 425c between the first wall portion 425a of the boss portion 425 and the lower surface of the receiving portion cover 440 during the process of coupling the receiving portion cover 440 to the case cover 420. For example, a paper bag-type gas absorbent, which is easily deformed in shape, may be caught in the space 425c between the first wall portion 425a of the boss portion 425 and the lower surface of the receiving portion cover 440. In this case, since the gap between the boss portion 425 and the receiving portion cover 440 is very small, the gas flowing through the valve 130 from the storage space 111 and into the space between the boss portion 425 and the receiving portion cover 440 may not be able to escape into the receiving space 422, or only a very small amount of gas may be discharged into the receiving space 422. To prevent such a situation, the boss portion 425 may include the second wall portion 425b that is lower in height than the first wall portion 425a.

Because the second wall portion 425b is relatively lower in height than the first wall portion 425a, a space 425d may be formed between the second wall portion 425b and the lower surface of the receiving portion cover 440, wherein the space 425d may be larger than the space 425c between the first wall portion 425a and the lower surface of the receiving portion cover 440. The space 425d between the second wall portion 425b and the lower surface of the receiving portion cover 440 may serve as an outlet for the gas discharged to the boss portion 425 through the valve 130 to be discharged into the receiving space 422. With the second wall portion 425b provided, although the gas absorbent is trapped between the boss portion 425 and the receiving portion cover 440, the gas discharged from the storage space 111 through the valve 130 may be discharged into the receiving space 422 through the space 425d between the second wall portion 425b and the lower surface of the receiving portion cover 440.

Referring to FIG. 26, the case cover 420 according to an embodiment may include a plurality of discharge holes 426 formed on the lower surface thereof. The plurality of discharge holes 426 may allow gas in the storage space 111 to flow into the case cover 420.

The case cover 420 may include a plurality of ribs 428 protruding downwardly from the lower surface thereof. The plurality of discharge holes 426 described above may be formed between the plurality of ribs 428. By forming the plurality of discharge holes 426 between the plurality of ribs 428 protruding downwardly from the lower surface of the case cover 420, each of the plurality of discharge holes 426 may be substantially open to one side. In addition, each of the plurality of discharge holes 426 may be formed relatively small as compared to a single discharge hole. By reducing the size of each of the plurality of discharge holes 426, food, rather than gas, may be prevented or reduced from entering through the plurality of discharge holes 426. When food enters through the discharge holes, the valve may become clogged. However, as described above, the case cover 420 according to an embodiment may reduce the size of each of the plurality of discharge holes 426 to block or reduce the entry of food into the plurality of discharge holes 426. As a result, clogging of the valve 130 may be prevented in advance.

The plurality of ribs 428 may protrude downwardly from the lower surface of the case cover 420, thereby separating the food in the storage space 111 from the lower surface of the case cover 420. The plurality of ribs 428 may separate the lower surface of the case cover 420 from the food, thereby preventing the plurality of discharge holes 426 from being blocked by food.

The food storage container according to an embodiment of the disclosure may include the case having the open side and forming the storage space to store food, the case covers configured to cover the open side of the case so as to seal the storage space, wherein the case covers includes the receiving portions separated from the storage space and forming the receiving space to receive the gas absorbents, the valve configured to open or close the discharge holes communicating between the receiving space and the storage space, wherein the valve opens the discharge hole in response to the pressure inside the storage space being greater than a predetermined value, and the receiving portion covers configured to seal the receiving space by being coupled to the receiving portion, and detachably coupled to the receiving portion. The certain gas flowing from the storage space to the receiving space through the discharge hole may be removed or adsorbed by the gas absorbent by undergoing a defined chemical reaction with the gas absorbent.

The valve may be configured to open the discharge hole in response to the pressure inside the storage space being at a first pressure.

The case cover may be separated from the case in response to the pressure inside the storage space being at a second pressure.

The first pressure may be lower than the second pressure.

The discharge hole may be formed in the receiving portion so as to be located in the receiving space in which the gas absorbent is accommodated.

The receiving portion may include a boss portion protruding upwardly from a periphery of the discharge hole.

The boss portion may include an upper end.

The upper end of the boss portion configured so that a first portion of the upper end has a lower height than a second portion of the upper end, and so that, when the receiving portion cover is detachably coupled to the receiving portion, a distance between the first portion of the upper end and the receiving portion cover is greater than a distance between the second portion of the upper end and the receiving portion cover.

The valve may be disposed within the boss portion.

The receiving portion cover may be provided to cover the open surface of the receiving portion.

The receiving portion cover may be configured to be coupled to or separated from the receiving portion by rotating relative to the receiving portion.

The food storage container may further include the sealing member provided to seal between the receiving portion and the receiving portion cover.

The sealing member may be provided on the receiving portion cover or the receiving portion.

The receiving portion cover may be provided to be coupled to or separated from the receiving portion by sliding relative to the receiving portion.

The receiving portions may be configured with at least a portion of the case cover recessed or protruding to form the receiving space in the case cover.

The case cover may include the guide portions provided on a lower surface of the case cover to guide gas inside the storage space to the discharge hole.

The guide portion may extend toward the discharge hole.

The receiving portion cover may be provided to cover completely an upper surface of the case cover.

The receiving space may be formed between the case cover and the receiving portion cover.

The gas absorbent may be provided to be separable from the receiving space to allow the gas absorbent to be replaced.

The certain gas generated from the food may be carbon dioxide (CO2), the gas absorbent may be calcium hydroxide (Ca(OH)2), and the defined chemical reaction may be Ca(OH)2 + CO2 -> CaCO3 + H2O.

The valve may include the movable member for opening the discharge hole by moving in a first direction and close the discharge hole by moving in a second direction opposite to the first direction, and the elastic member for elastically biasing the movable member so that the movable member moves in the second direction.

The valve may further include the first housing for receiving a portion of the movable member and a portion of the elastic member, and the second housing coupled to the first housing and configured to receive a portion of the remaining portion of the movable member and a portion of the remaining portion of the elastic member.

The second housing may include the flange portion having a diameter larger than the diameter of the discharge hole so as not to pass through the discharge hole.

The receiving portion cover may include the pressing protrusions for pressing the first housing to prevent the first housing and the second housing from being separated from the case cover.

According to the spirit of the present disclosure, the food storage container capable of properly maintaining the certain gas generated from food in the storage container and preventing gas leakage due to the increase in internal pressure caused by the generated certain gas may be provided, and the refrigerator including the same.

While the present disclosure has been particularly described with reference to exemplary embodiments, it should be understood by those of skilled in the art that various changes in form and details may be made without departing from the spirit and scope of the present disclosure.

## Claims

1. A food storage container, comprising:
a case having an open side and forming a storage space; and
a case cover configured to be detachably coupled to the case so that, when the case cover is detachably coupled to the case, the case cover covers the open side of the case and seals the storage space, the case cover including:
a receiving portion forming a receiving space configured to accommodate a gas absorbent, and having a discharge hole between the receiving space and the storage space,
a valve configured to open the discharge hole in response to a pressure inside the storage space being greater than a predetermined value, and close the discharge hole in response to the pressure inside the storage space being less than the predetermined value, and
a receiving portion cover configured to be detachably coupled to the receiving portion so that, when the receiving portion cover is detachably coupled to the receiving portion, the receiving portion cover seals the receiving space,
wherein, when the case cover is coupled to the case and the receiving portion cover is coupled to the receiving portion with the gas absorbent accommodated in the receiving portion, and the pressure inside the storage space is greater than the predetermined value so that the valve opens the discharge hole, a gas flowing from the storage space through the discharge hole to the receiving space is removed or adsorbed by the gas absorbent by undergoing a defined chemical reaction with the gas absorbent.

2. The food storage container of claim 1, wherein
a predetermined pressure inside the storage space at which the valve is configured to open the discharge hole is a first pressure,
the case cover is configured to be separated from the case in response to the pressure inside the storage space being a second pressure, and
the second pressure is higher than the first pressure.

3. The food storage container of claim 1, wherein
the discharge hole is located in the receiving space in which the gas absorbent is accommodated.

4. The food storage container of claim 1, wherein
the receiving portion includes a boss portion protruding upwardly from a periphery of the discharge hole,
the boss portion includes an upper end configured so that a first portion of the upper end has a lower height than a second portion of the upper end, and so that, when the receiving portion cover is detachably coupled to the receiving portion, a distance between the first portion of the upper end and the receiving portion cover is greater than a distance between the second portion of the upper end and the receiving portion cover, and
the valve is disposed within the boss portion.

5. The food storage container of claim 1, wherein
the receiving portion cover is configured to cover an open surface of the receiving portion, and
the receiving portion cover is configured to be coupled to and separated from the receiving portion by rotating the receiving portion cover relative to the receiving portion.

6. The food storage container of claim 1, wherein
the receiving portion cover is configured to cover an open surface of the receiving portion, and
the receiving portion cover is configured to be coupled to and separated from the receiving portion by sliding the receiving portion cover relative to the receiving portion.

7. The food storage container of claim 5, further comprising:
a sealing member disposed on the receiving portion cover or the receiving portion, and configured so that, when the receiving portion cover is detachably coupled to the receiving portion, a seal is formed between the receiving portion cover and the receiving portion.

8. The food storage container of claim 1, wherein
at least a portion of the case cover is recessed or protruding to form the receiving space in the case cover.

9. The food storage container of claim 1, wherein
the case cover includes a guide portion on a lower surface of the case cover, the guide portion being configured to guide gas inside the storage space to the discharge hole, and
the guide portion extends longitudinally toward the discharge hole.

10. The food storage container of claim 1, wherein
an upper surface of the case cover is configured as the receiving portion,
the receiving portion cover is configured to cover the upper surface of the case cover entirely, and
when the receiving portion cover is detachably coupled to the receiving portion, the receiving space is disposed between the case cover and the receiving portion cover.

11. The food storage container of claim 1, wherein
the receiving space is configured so that, when the receiving portion cover is detached from the receiving portion, the gas absorbent is replaceable.

12. The food storage container of claim 1, wherein
the gas flowing from the storage space is carbon dioxide (CO2) generated from food in the storage space,
the gas absorbent is calcium hydroxide (Ca(OH)2), and
the defined chemical reaction is Ca(OH)2 + CO2 -> CaCO3 + H2O.

13. The food storage container of claim 1, wherein
the valve includes:
a movable member configured to move in a first direction to open the discharge hole, and move in a second direction opposite to the first direction to close the discharge hole, and
an elastic member configured to elastically bias the movable member in the second direction.

14. The food storage container of claim 13, wherein
the valve includes:
a first housing configured to receive a first portion of the movable member and a first portion of the elastic member, and
a second housing coupled to the first housing and configured to receive a second portion of the movable member and a second portion of the elastic member.

15. The food storage container of claim 14, wherein
the second housing includes a flange portion having a diameter larger than a diameter of the discharge hole so that the second housing cannot pass through the discharge hole, and
the receiving portion cover includes a pressing protrusion configured so that, when the receiving portion cover is detachably coupled to the receiving portion, the pressing protrusion presses the first housing to prevent the first housing and the second housing from being separated from the case cover.
